(19) Europäisches Patentamt European Patent Office Office européen des brevets

(11) **EP 4 571 371 A1**

(12) **EUROPEAN PATENT APPLICATION**

(43) Date of publication:
**18.06.2025 Bulletin 2025/25**

(51) International Patent Classification (IPC):
**G02B 1/115** (2015.01)    **G02B 5/08** (2006.01)
**G02B 27/00** (2006.01)

(21) Application number: **23307212.3**

(22) Date of filing: **14.12.2023**

(52) Cooperative Patent Classification (CPC):
**G02B 1/115; G02B 5/0833; G02B 27/0012**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicant: **ESSILOR INTERNATIONAL**
**94220 Charenton-Le-Pont (FR)**

(72) Inventor: **DING, Xingzhao**
**Singapore 339338 (SG)**

(74) Representative: **Jacobacci Coralis Harle**
**32, rue de l'Arcade**
**75008 Paris (FR)**

(54) **OPTICAL ARTICLE HAVING AN INTERFERENTIAL COATING WITH COLOR ROBUSTNESS**

(57)    The invention relates to an optical article comprising at least:
a base element having a front main surface and a rear main surface, and
at least one interferential multilayered coating deposited onto the front main surface and/or the rear main surface of said substrate and comprising at least one layer having a low refractive index which is lower than 1.55, defined as "LI layer", and at least one layer having a high refractive index which is equal to or higher than 1.55, defined as "HI layer", the refractive indexes being expressed at 25°C at a wavelength of 550 nm,
characterized in that said interferential multilayered coating comprises an outermost sheet exhibiting a refractive index gradient which gradually decreases in the direction moving away from the base element and having a maximum value of refractive index lower than or equal to 1.55, and said interferential multilayered coating has improved colorimetric characteristics.

**FIG.1**

EP 4 571 371 A1

**Description**

**TECHNICAL FIELD OF THE INVENTION**

The invention relates to an optical article comprising a base element, such as a substrate, having a front main face and a rear main surface, one at least of these two main surfaces being coated with an interferential multilayered coating. The interferential multilayered coating is specific and is able to and/or configured to provide both good optical and colorimetric characteristics without sacrificing its mechanical and thermal performances. The optical article may especially be an ophthalmic lens, in particular a spectacle lens.

The invention also refers to a method for manufacturing such an optical article.

**BACKGROUND INFORMATION AND PRIOR ART**

An interferential coating usually consists of a multilayer comprising interferential thin layers, generally an alternation of layers based on a dielectric material, such as mineral oxides, of high refractive index and a dielectric material of low refractive index deposited for instance under vacuum.

An interferential coating may be either a reflective coating or an antireflective coating.

Reflective coatings are usually designed so as to confer to the surface of an optical article they coat, a mean light reflection factor in the visible region Rv (front face OA) that is strictly higher than 2.5 % for an angle of incidence of 15°. Reflective coatings are generally applied to a surface of an optical article so as to provide a reduction in transmitted visible, ultra-violet or infrared light (i.e.: increase the light ray reflection). They may also impart a mirror and/or colored appearance to the optical article, which may be desirable for aesthetic purposes. Such a coating is used for example to provide solar spectacle lenses with a mirror effect.

On the contrary, when deposited on a transparent substrate, the function of an antireflective coating is to reduce its light reflection and therefore to increase its light transmission. A substrate thus coated will therefore have its transmitted light/reflected light ratio increased, thereby improving the visibility of objects placed behind it. When it is sought to achieve a maximum antireflection effect, it is then preferable to provide both faces (front and rear faces) of the substrate with this type of coating. This antireflective coating is usually used in the ophthalmic field. Accordingly, traditional antireflective coatings are designed and optimized to reduce reflection on the lens surface in the visible region, typically within the spectrum range of from 380 to 780 nm. In general, the mean light reflection factor in the visible region Rv on the front and/or rear faces of standard ophthalmic lens is between 1.5 to 2.5%. Some of these antireflective coatings may also be designed and optimized to reduce reflection on the lens surface within the UVA band of from 315 to 380nm and/or the UVB band of from 280 to 315 nm. These UVA and UVB bands are indeed particularly harmful to the retina. The mean reflection in the UVA and UVB regions may thus attain high levels (up to 60%) for traditional antireflective lenses. In one hand, as regards non-solar antireflective articles which are marketed by most of the manufacturers over the course of these recent years, the UV mean reflection does range from 10 to 25%, for an angle of incidence of from 30 to 45°. It is not problematic on the front face of the lens, since the major part of the UV radiation which comes from the front of the wearer and might attain the wearer's eye (normal incidence, 0 to 15°) generally get absorbed by the ophthalmic lens substrate. On the other hand, the UV radiation resulting from light sources located behind the wearer may reflect on the lens rear face and reach the wearer's eye if the lens is not provided with an antireflective coating which is efficient in the ultraviolet region, thus potentially affecting the wearer's health. Such phenomenon is made stronger by the trend for fashion sunglasses with high diameters which increase the risk of stray reflections getting into the eyes. It is admitted that the light rays that may reflect onto the lens rear face and reach the wearer's eye have a narrow range of incidence angle.

There are number of patents dealing methods for making interferential coating, such as antireflective coating, that would be at least efficient in the visible region, while having satisfactory mechanical performances.

For instance, the document JP2001/288562 describes a method so as to improve the adhesion between a substrate (i.e.: glass plate) and the multilayer, especially for window glasses used in building and automobile applications. This document describes a method for coating a substrate with a thin film of silicon compound by evaporating a silicon material using irradiation with arc discharge plasma in a film formation apparatus. The method further comprises the introduction of a gas flow composed of a mixture of oxygen and nitrogen, wherein the gas ratio of oxygen to nitrogen introduced, i.e.: $N_2/(N_2+O_2)$ increases from 0 to 1.0 so as to increase the refractive index of the thin silicon compound film thus formed. In the illustrated example, the substrate is respectively coated with: 80 nm of an antireflective coating having a continuous increased refractive index gradient ranging from 1.48 (corresponding to pure $SiO_2$ obtained with 100% $O_2$) to 2.1 (corresponding to pure silicon nitride obtained with 100% $N_2$) (the levels of gas ratio $N_2/(N_2+O_2)$ were respectively of 0; 0.2; 0.4; 0.5; 0.8 and 1) and 20 nm of a layer of pure $SiO_2$ obtained with 100% $O_2$ and hence having a stable refractive index of 1.48. It is mentioned that the reflectance at the specific wavelength of 550 nm is of 0.5% versus 4% for the glass plate. However, this document is mute about the mean light reflection factor in the entire whole visible region Rv ranging from 380 nm to 780 nm. This document also discloses that there was no significant visible damage for this example after an abrasion test (i.e.: Taber abrasion test (load 250gf, revolution speed 100 times) equivalent to the abrasion resistance test stipulated in JIS-R3221).

However, it would be advisable to improve the robustness and the aesthetic appearance of an optical article, such as a lens, without decreasing its mechanical performances. It is well-known that an antireflective coating having an outermost layer that has a low refractive index layer can be designed to exhibit low Rv. However, this outermost low refractive index layer may often result in a degradation of mechanical performance of the antireflective coating.

The term "robustness" of an interferential coating in the present invention is defined as the ability of this one to resist change despite the variations induced by its manufacture process. These variations depend, for instance, on the type of substrate which is used, the setting of the manufacturing machine (temperature schedule, appropriate time, setting of the electron gun...) and/or its usage mode, the replacement of said manufacturing machine by another one.

Indeed, when a multilayered antireflective coating is manufactured at industrial scale, some thickness variations for each layer generally occur. These variations lead to different reflection performance, and especially different perceived residual reflected color of the multilayered antireflective coating. If the perceived residual reflected color of the antireflective coating of two lenses is different, these lenses will appear different and will not be able to be associated in pair.

In addition, depending on the curvatures of the lenses and the value of incidence (angle θ), the residual reflected color of the multilayered antireflective coating of each lens seems not to be homogeneous in color on all the surface of the lens ("chameleon effect"). A different residual reflected color between the right and the left portions of a lens, such as a color gradient of different hues "h" (not the same color turning for instance from blue to red) or a color gradient of different color intensity (for example, turning from saturated color to a less saturated color, or inversely) may be viewed by an observer according to the incidence angle θ. Hence, it would be desirable to improve the esthetic appearance of such a lens by obtaining, for instance, a homogenous perceived residual reflected color of the lens surface for an observer looking at the lens wearer.

The robustness is also essential for a lens having a mirror coating (i.e.: reflective coating), usually used for sunglass. Indeed, for mirror coating (as well as for antireflective coating), the variability of the perceived color from one lens to another lens may be problematic especially in a pair of spectacles, such as sunglasses. wherein two separate lenses are placed next to each other.

Hence, an object of the present invention is thus to propose a new optical article which avoids, at least in part, the aforementioned drawbacks.

Indeed, there is still a need to provide novel interferential coatings having very good antireflective properties at least in the visible region and possibly in the UVA and UVB bands for an antireflective coating or having very good reflective properties for a mirror coating, while having at the same time robustness properties and aesthetic appearance versus the interferential coatings of the prior art.

In addition, there is also a need for providing an interferential coating for an optical article, such as an ophthalmic lens having a predetermined perceived color that is repeatable in production line.

There is also a need to provide novel interferential coatings having further mechanical and thermal performances.

## SUMMARY OF THE INVENTION

The Applicant sought to develop a new transparent optical article comprising an organic or mineral base element bearing an interferential multilayered coating, preferably a lens, and more preferably an ophthalmic lens for eyeglasses, said interferential coating having improved optical and colorimetric characteristics especially as compared to already known interferential coated optical articles, while having very good mechanical and thermal performances.

For that purpose, the Applicant developed a new and atypical structure for optical article comprising an interferential multilayered coating.

The invention relates to an optical article comprising at least:

a base element having a front main surface and a rear main surface,
at least one interferential multilayered coating deposited onto the front main surface and/or the rear main surface of said substrate and comprising at least one layer having a low refractive index which is lower than 1.55, defined as "LI layer", and at least one layer having a high refractive index which is equal to or higher than 1.55, defined as "HI layer", the refractive indexes being expressed at 25°C at a wavelength of 550 nm,
characterized in that:

- said interferential multilayered coating comprises an outermost sheet exhibiting a refractive index gradient which gradually decreases in the direction moving away from the base element and having a maximum value of refractive index lower than or equal to 1.55,
- said interferential multilayered coating has, in reflection,

a Chroma C* defined in the international colorimetric CIE L*a*b* (1976) whose standard deviation, defined as "oC*", for an angle of incidence of 15°, is strictly lower than 2.0, and has a hue angle defined in the international colorimetric CIE L*a*b* (1976) whose standard deviation, defined as "σh", for an angle of incidence of 15°, is lower than or equal to 15° provided that said interferential multilayered coating has, for an angle of incidence of 15°, a mean light reflection factor in the visible region Rv that is lower than or equal to 2.5 %, or

a Chroma C* whose standard deviation, defined as "σC*", for an angle of incidence of 15°, is strictly lower than 6.9, and has a hue angle whose standard deviation, defined as "oh", for an angle of incidence of 15°, is lower than or equal to 5.8°, provided that said interferential multilayered coating has, for an angle of incidence of 15°, a mean light reflection factor in the visible region Rv that is strictly higher than 2.5%.

Indeed, thanks to its characteristics, the interferential multilayered coating (either antireflective coating or mirror coating) according to the invention allows to provide excellent color robustness, which is critically important, particularly for mass production and aesthetic appearance of the residual reflected color pairing for left and right lenses, especially spectacles. Indeed and as mentioned above, the manufacturer must ensure the reproducibility of this residual reflection color of such an interferential multilayered coating so that the perceived color is substantially the same from one lens to the other so as to enable lens color pairing, that is to say that two lenses resulting from the same industrial process cannot be discriminated between each other and their residual reflection colors are considered by an observer as being identical.

Here, an improvement of at least 0.1% for σC and/or σh between the standard optical articles that may be available on the market and the new optical articles according to the invention is significant (i.e.: better colorimetric robustness in mass production).

## DETAILED DESCRIPTION OF THE INVENTION

## A) Definitions

The terms "comprise" (and any grammatical variation thereof, such as "comprises" and "comprising"), "have" (and any grammatical variation thereof, such as "has" and "having"), "contain" (and any grammatical variation thereof, such as "contains" and "containing"), and "include" (and any grammatical variation thereof, such as "includes" and "including") are openended linking verbs. They are used to specify the presence of stated features, integers, steps or components or groups thereof, but do not preclude the presence or addition of one or more other features, integers, steps or components or groups thereof. As a result, a method, or a step in a method, that "comprises," "has," "contains," or "includes" one or more steps or elements possesses those one or more steps or elements, but is not limited to possessing only those one or more steps or elements.

Unless otherwise indicated, all numbers or expressions referring to quantities of ingredients, ranges, reaction conditions, etc. used herein are to be understood as modified in all instances by the term "about."

Also, unless otherwise indicated, the indication of an interval of values « from X to Y » or "between X to Y", according to the present invention, means as including the values of X and Y.

We mean an ophthalmic article defined by, but not exclusive of corrective lenses, noncorrective lenses, contact lenses, intra-ocular lenses, magnifying lenses, protective lenses, and visors containing photochromic compounds within a coating, the lens material, a film, or any adjacent layer.

As used herein, "a base element" can consist in an optical, such as an ophthalmic, substrate or in a support film of optical quality to be fixed on an optical/ophthalmic substrate thanks to an adhesive such as a pressure-sensitive adhesive of optical quality (PSA layer) (i.e.: laminate).

As used herein, "interferential coating" means a coating, generally composed of interferential thin layers and comprises at least one layer having a low refractive index which is lower than 1.55, defined as "LI layer", and at least one layer having a high refractive index which is equal to or higher than 1.55, defined as "HI layer.

In the present application, when an optical lens comprises one or more coatings onto the surface thereof, the expression "to deposit a layer, a sheet or a coating onto the article" is intended to mean that a layer, a sheet or a coating is deposited onto the external (exposed) surface of the outer coating of the article, that is to say its coating that is the most distant from the substrate.

Unless otherwise indicated, a coating, a layer or a sheet, that is said to be "on" a substrate/base element or deposited "onto" a substrate/base element" is defined as a coating, a layer or a sheet, which (i) is positioned above the substrate/base element, (ii) is not necessarily in contact with the substrate/base element, that is to say one or more intermediate coatings/sheets may be arranged between the substrate/base element and the coating or sheet in question, and (iii) does not necessarily completely cover the substrate/base element.

In a preferred embodiment, the coating on a substrate/base element or deposited onto a substrate/base element is in direct contact with this substrate.

When "a layer/sheet 1 is lying under a layer 2/sheet 2", it is intended to mean that layer/sheet 2 is more distant from the substrate than layer 1/sheet 1 respectively.

By outermost layer or sheet of the interferential coating, it is meant the layer or sheet of the interferential coating which is the furthest from the substrate.

By innermost layer or sheet of the interferential coating, it is meant the layer or sheet of the interferential coating which is the closest to the substrate.

By inner layer/sheet of the interferential coating, it is meant any layer/sheet of the interferential coating except for the outermost layer/sheet of said interferential coating.

Also, unless stated otherwise, all thicknesses disclosed in the present application relate to physical thicknesses.

As used herein, a layer of the interferential coating is defined as having a thickness higher than or equal to 1 nm. Thus, any layer having a thickness lower than 1 nm will not be considered when counting the number of layers in the reflective coating. A sub-layer (having generally a physical thickness of 150 nm) is also not considered when counting the number of layers of the interferential coating.

Unless otherwise specified, the refractive indexes referred to in the present application are expressed at 25 °C at a wavelength of 550 nm.

As used herein, the rear (or the inner or Concave or CC) face of the base element/substrate is intended to mean the face which, when using the article, is the nearest from the wearer's eye. It is generally a concave face. On the contrary, the front face of the substrate/base element (or Convex or CX), is the face which, when using the article, is the most distant from the wearer's eye. It is generally a convex face.

Also, as used herein, a "transparent substrate/base element" is understood to be transparent, when the observation of an image through said substrate is perceived with no significant loss of contrast, that is, when the formation of an image through said substrate is obtained without adversely affecting the quality of the image.

The colorimetric coefficients of the optical article of the invention in the international colorimetric system CIE L*a*b* (1976) (such as the Chroma C* and the hue "h") are calculated between 380 and 780 nm, taking the standard illuminant D 65 and the observer into account (angle of 10°). The observer is a "standard observer" as defined in the international colorimetric system CIE L*a*b*. Indeed, in the CIE L*a*b* space, it is possible to express not only overall variations in color, but also in relation to one or more of the parameters L*, a* and b*. This can be used to define new parameters and to relate them to the attributes of the visual sensation. Clarity, related to luminosity, is directly represented by the value of L*. Chroma: $C^* = (a^{*2} + b^{*2})^{1/2}$ defines the chromaticness. The angle of hue: $h = tg^{-1} (b^*/a^*)$ (expressed in degrees); related to hue.

According to the invention, the colorimetric measurements (in reflection) of the face coated with the interferential multilayered coating of the invention (convex/front face): reflection factors Rv, hue angle h, and chroma C* in the international colorimetric CIE (L*, a*, b*) space were carried out with a Zeiss spectrophotometer, taking into account the standard illuminant D65, and the standard observer 10° (for h and C*). They are provided for an angle of incidence of 15° or 35°

According to the invention, the "angle of incidence (symbol θ)" is the angle formed by a ray light incident on an ophthalmic lens surface and a normal to the surface at the point of incidence. The ray light is for instance an illuminant light source, such as the standard illuminant D65 as defined in the international colorimetric CIE L*a*b* (1976). Generally, the angle of incidence changes from 0° (normal incidence) to 90° (grazing incidence). The usual range for angle of incidence is from 0° to 75° and is typically 15° for the present invention.

The optical characteristics comprise at least the mean light reflection factor in the visible region $R_V$, also named the "luminous reflectance".

Herein, the "luminous reflectance" noted $R_V$, is such as defined in the ISO 13666:1998 Standard, and measured in accordance with the ISO 8980-4, i.e., this is the weighted spectral reflection average over the whole visible spectrum between 380 and 780 nm. $R_V$ is usually measured for an angle of incidence lower than 17°, typically of 15°, but can be evaluated for any angle of incidence.

According to the invention, when the mean light reflection factor in the visible region Rv onto the front and/or rear main face of the optical article is strictly higher than 2.5%, more preferably higher than 3%, even more preferably higher than 5%, this means that the multilayered interferential coating is able to provide a mirror behaviour onto the front or rear main surface of the optical article respectively. Especially, a "mirror behaviour" enables to provide a reduction in transmitted visible, ultra-violet and/or infrared light. In other words, an optical article having on its front main face a mirror behaviour reflects at least a part of light arriving on said surface. Said mirror behaviour increases light reflection at the article/air interface over a determined portion of the spectrum. Reflection may be in the ultraviolet spectrum or in the visible spectrum or in the infrared spectrum.

According to the invention, when the mean light reflection factor in the visible region Rv onto the front and/or rear main face of the optical article is equal to or lower than 2.5%, this means that the multilayered interferential coating is able to provide an antireflective behaviour onto the front and/or rear main surface of the optical article respectively.

According to the invention, said mean reflection factor Ruv is defined through the following relation:

$$R_{UV} = \frac{\int\limits_{280}^{380} W(\lambda).R(\lambda).d\lambda}{\int\limits_{280}^{380} W(\lambda).d\lambda}$$

wherein $R(\lambda)$ represents the optical article spectral reflection factor at a given wavelength, and $W(\lambda)$ represents a weighting function equal to the product of the solar spectrum irradiance $Es(\lambda)$ and the efficiency relative spectral function $S(\lambda)$.

The spectral function $W(\lambda)$, enabling to calculate the ultraviolet radiation transmission factors, is defined according to the ISO 13666:1998 standard. It makes it possible to express the ultraviolet solar radiation distribution tempered by the relative spectral efficiency of such radiation for a user, since it simultaneously takes both the solar spectral energy $Es(\lambda)$ into account, which does globally emit less UVB-rays as compared to UVA-rays, and the spectral efficiency $S(\lambda)$, UVB-rays being more harmful than UVA-rays. The values for those three functions in the ultraviolet region are given in the table disclosed in ISO 13666:1998 standard (which is reproduced at page 6 of the publication WO 2012/076714).

The mean reflection factor Ruv is measured in the present application at an angle of incidence of 35°. Calculation examples of Ruv for angles of incidence at 30° and 45° are given in WO 2012/076714. A person skilled in the art can easily implement calculation based on reflection values measured on the respective faces at the desired incidence angle (0°, 15°, 35°).

As previously mentioned, the term "robustness" of an optical article, such as an ophthalmic lens, in the present invention is defined as the ability of this lens to resist change despite the variations induced by its manufacture process. These variations depend, for instance, on the type of substrate/base element, which is used, the setting of the manufacturing machine (temperature schedule, appropriate time, setting of the electron gun...) and/or its usage mode, the replacement of said manufacturing machine by another one.

According to the invention, the robustness of various parameters was calculated with the Essential MacLeod software provided by Thin Film Center Inc. A simulation was made so as to test the robustness (also called standard deviation or Std Dev) of the interferential multilayered coating according to the invention. 500 iterations were made so as to evaluate the impact of the thickness variations (one standard deviation corresponds to $\pm$ 2.2% variation in normal/-gaussian distribution for the thickness of each layer of the stack, all varied independently and at the same time) induced by the manufacturing process which may affect the performances and properties of two different lens comprising the same structure (same composition and thickness layers), such as chroma "C*", the hue "h" (in reflection) and the optical factors: Rv, Ruv for an angle of incidence of 15° (illuminant D65 and observer 10°). The "average" values given below are the average values of the parameters on 500 samples obtained after applying a $\pm$ 2.2% random variation to the thickness of each layer of the stack. The standard deviation quantifies the amount of variation or dispersion of the set of data values. A low standard deviation indicates that the data points tend to be close to the average of the parameter.

In the context of the invention, the ESPF ("Eye Sun Protection Factor") of an optical article is given by the following relationship:

$$ESPF = 100\%/(Ruv^{35°}(\%) + 3\sigma Ruv^{35°}(\%))$$

where

Ruv$^{35°}$ is the amount of UV (between 280 nm and 380 nm) reflected at an angle of incidence of 35° from the back face, $3\sigma Ruv^{35°}(\%)$ is 3 times the value of the robustness of Ruv$^{35}$.

## B) Optical article according to the invention

As mentioned-above, the Applicant has developed a transparent optical article, especially an ophthalmic lens such as spectacle lens, comprising a base element, such as a substrate in mineral or organic glass comprising at least an interferential multilayered coating, said transparent optical article having improved color and optical robustness and to do so without compromising not only the mechanical and thermal performances of the optical article, its cosmetic appearance, but also the economic and/or industrial feasibility of its manufacture.

The optical article is such as defined in the set of claims and comprises a base element having a front main surface and a rear main surface and at least one interferential multilayered coating deposited onto the front main surface and/or the rear main surface of said substrate.

## B.1 The base element/substrate

The optical article according to the present invention comprises a base element.

According to one embodiment, this base element can be a laminate, that is to say a support film of optical quality to be fixed on an optical/ophthalmic substrate thanks to an adhesive such as a pressure-sensitive adhesive of optical quality (PSA layer). Preferably, the support film is made of cellulose triacetate (TAC) and has a thickness of at least 40 microns, preferably a thickness in the range of 40 $\mu$m to 300 $\mu$m inclusive and preferably a thickness of 80 to 190 $\mu$m. Materials of the support film may be selected from the group of films made of cellulose triacetate (TAC), cellulose acetate butyrate (CAB), polycarbonate (PC), poly(ethylene terephthalate) (PET), poly(methylmethacrylate) (PMMA), urethane polymer (TPU), cyclo olefin copolymer (COC), polyester copoblock amide (like Pebax) and Polyimides.

According to another embodiment (described hereafter), the base element can consist in an ophthalmic substrate of a transparent optical article, such as a lens or lens blank, and more preferably an ophthalmic lens or lens blank.

Generally speaking, the interferential coating of the optical article according to the invention may be deposited onto any substrate, and preferably onto organic lens substrates, for example a thermoplastic or thermosetting plastic material.

Thermoplastic may be selected from, for instance: polyamides; polyimide; polysulfones; polycarbonates and copolymers thereof; poly(ethylene terephthalate) and polymethylmethacrylate (PMMA).

Thermoset materials may be selected from, for instance: cycloolefin copolymers such as ethylene/norbornene or ethylene/cyclopentadiene copolymers ; homo- and copolymers of allyl carbonates of linear or branched aliphatic or aromatic polyols, such as homopolymers of diethylene glycol bis(allyl carbonate) (CR 39®) ; homo- and copolymers of (meth)acrylic acid and esters thereof, which may be derived from bisphenol A ; polymer and copolymer of thio(meth)acrylic acid and esters thereof, polymer and copolymer of allyl esters which may be derived from Bisphenol A or phthalic acids and allyl aromatics such as styrene, polymer and copolymer of urethane and thiourethane, polymer and copolymer of epoxy, and polymer and copolymer of sulphide, disulfide and episulfide, and combinations thereof.

As used herein, a (co)polymer is intended to mean a copolymer or a polymer. As used herein, a (meth)acrylate is intended to mean an acrylate or a methacrylate. As used herein, a polycarbonate (PC) is intended to mean either homopolycarbonates or copolycarbonates and block copolycarbonates.

Homopolymers of diethylene glycol bis(allyl carbonate) (CR 39®), allylic and (meth)acrylic copolymers, having a refractive index between 1.54 and 1.58, polymer and copolymer of thiourethane, polycarbonates are preferred.

In particular, the base element recommended for the invention is a substrate selected from materials obtained by (co)polymerization of di(ethylene glycol) bis(allyl carbonate) and may correspond to the CR-39® ESSILOR ORMA® lenses.

As it will be shown hereafter, the substrate/base element may be coated with one or more functional coatings prior to depositing the antireflective coating of the invention. These functional coatings traditionally used in optics may be, without limitation, an impact-resistant primer layer, an abrasion-resistant coating and/or a scratch-resistant coating, a polarizing coating, a photochromic coating or a tinted coating. In the following a substrate means either a bare substrate or such a coated substrate.

Preferably, the substrate/base element and the optional abrasion-resistant coating and/or a scratch-resistant coating generally coated onto said substrate have a similar/close refractive index so as to avoid fringes or cosmetic defects.

Prior to depositing the interferential coating, the surface of said substrate is usually submitted to a physical or chemical surface activating treatment, so as to reinforce the adhesion of the antireflective coating. Such pre-treatment is generally conducted under vacuum. It may be a bombardment with energetic and/or reactive species, for example with an ion beam ("Ion PreCleaning" or "IPC") or with an electron beam, a corona discharge treatment, an ion spallation treatment, an ultraviolet treatment or a plasma-mediated treatment under vacuum, generally using an oxygen or an argon plasma. It may also be an acid or basic treatment and/or a solventbased treatment (water, hydrogen peroxide or any organic solvent).

## B.2 The interferential multilayered coating

As previously mentioned, the interferential (IF) coating according to the invention has been designed to provide not only an excellent color robustness, but also preferably a low reflection in the visible region (from 380 to 780 nm) and advantageously in the UV band (from 280 nm to 380nm), while having good mechanical performances. Indeed, due to its characteristics, the interferential coating according to the invention has a suitable cosmetic appearance (i.e.: good colorimetric robustness) and preferably also suitable optical characteristics, such as a very low reflection both in the visible region and in the UV band and excellent optical robustness.

For these purposes, the interferential multilayered coating, named hereafter "IF coating" is characterized by various optical and colorimetric parameters that enable to achieve these goals.

According to the invention, the IF coating presents a specific stack of:

- at least one layer having a low refractive index which is lower than 1.55, defined as "LI layer",
- at least one layer having a high refractive index which is equal to or higher than 1.55, defined as "HI layer", and
- an outermost sheet exhibiting a refractive index gradient which gradually decreases in the direction moving away from the base element and having a maximum value of refractive index lower than 1.55.

Therefore, this outermost sheet has a low refractive index which gradually decreases in the direction moving away from the base element.

In particular, the outermost sheet has a maximum value of refractive index lower than or equal to 1.52, preferably lower than or equal to 1.48 and typically lower than or equal to 1.47. As used herein, a "maximum value of refractive index lower than or equal to 1.55" includes the following values and/or any intervals comprised between these values: 1.55; 1.54; 1.53; 1.52; 1.51; 1.50; 1.49; 1.48; 1.47; 1.46; 1.45; 1.44; 1.43; 1.42; 1.41, etc.

Especially, this outermost sheet exhibiting a refractive index gradient is deposited by evaporation of at least one precursor compound using electron-beam evaporation with introduction of oxygen gas in a vacuum chamber with a flow rate that is gradually increased during the deposition of said outermost sheet. In general, the at least on precursor is $SiO_2$. According to an embodiment, this outermost sheet comprises also $SiO_2$ in its structure. It was indeed found by the Applicant that when oxygen gas flow rate increases, the refractive index of the as-deposited precursor material, such as $SiO_2$, becomes lower and lower. Without being bound by any theories, it seems that this phenomenon can be interpreted that with increasing oxygen flow rate, the working pressure in the vacuum chamber is increased and therefore, the density of the as-deposited $SiO_2$ film decreases due to the loss of kinetic energy of depositing species by the increased collision with residual gaseous molecules. This fact can be used to generate a gradient decreasing index in the outermost sheet of the antireflective coating.

The Applicant has indeed discovered that by replacing the standard outermost LI layer of traditional IF coating by a LI outermost sheet exhibiting a refractive index gradient which gradually decreases in the direction moving away from the base element and having a maximum value of refractive index lower than 1.55, the IF coating thus formed presents better colorimetric robustness (σh & oC*) than said traditional IF coating. In addition and as it will be shown in the examples below, the IF coating according to the invention comprising this specific LI outermost sheet generally exhibits also lower Rv and σRv, lower Ruv and σRuv and higher ESPF (taking account of 3 times of σRuv) than the corresponding traditional IF coating with a homogenous outmost layer generally composed of $SiO_2$ and having hence a stable and regular refractive index Moreover, the Applicant discovered that the IF coatings according to the invention have mechanical and thermal performance as good as those of these traditional IF coatings.

First, the IF coating has, in reflection, excellent color robustness. For interferential coatings especially in the field of ophthalmic lenses, good colorimetric robustness is critically important, particularly for mass production and aesthetic appearance of IF color pairing for left and right lenses.

Indeed, the IF coating according to the invention has the standard deviation of the chroma C* and the standard deviation for the hue "h" that are very low. This means that the IF coating has a great ability to resist change despite the variations induced by its manufacture process. As mentioned above, the hue and the chroma C* are defined in the international colorimetric CIE L*a*b* (1976).

According to an embodiment, the IF coating is an antireflective coating, named hereafter AR coating (i.e.: Rv that is lower than or equal to 2.5 % for an angle of incidence of 15°) and has the following characteristics.

According to this embodiment, the AR coating has a chroma C* whose standard deviation, defined as "σC*", for an angle of incidence of 15°, is strictly lower than 2.0.

In particular, the AR coating has, in reflection, a σC*, for an angle of incidence of 15°, which is lower than or equal to 1.9, preferably lower than or equal to 1.8, typically lower than or equal to 1.7. As used herein, a "standard deviation of the chroma, defined as "oC* which is strictly lower than 2.0" includes the following values and/or any intervals comprised between these values (limits included except 2.0): 1.99; 1.9; 1.8; 1.7; 1.6; 1.5; 1.4; 1.3; 1.2; 1.1; 1.0; 0.9; 0.8; 0.7; 0.6; 0.5; etc.

In general, the AR coating may have, in reflection, for an angle of incidence of 15°, a chroma C* which is higher than or equal to 5, preferably higher than or equal to 6, in particular higher than or equal to 7 and typically higher than or equal to 8. As used herein, "a chroma C* higher than or equal to 5" includes the following values and/or any intervals comprised between these values (limits included): 5; 6; 7; 8; 9; 10; 11; 12; 13; 14; 15; 16, 17, 18, 19, 20; etc.

According to the invention, the AR coating has also an excellent hue robustness. Indeed, the IF coating has a hue angle whose standard deviation, defined as "oh", for an angle of incidence of 15°, is lower than or equal to 15°, preferably lower than or equal to 12. According to the invention, "a standard deviation, defined as "oh", for an angle of incidence of 15°, which is lower than or equal to 15°" includes the following values and/or any intervals comprised between these values (in °): 15; 14; 13; 12; 11; 10, 9, 8, 7, 6, 5, 4, 3, 2, 1; 0.9; 0.8; 0.7; 0.6; 0.5; 0.4; 0.3; 0.2; 0.1; etc.

According to another embodiment, the IF coating is a reflective coating or a mirror coating, named hereafter "M coating" (i.e.: Rv that is strictly higher than 2.5 % for an angle of incidence of 15°) and has the following characteristics.

According to this embodiment, the M coating has a chroma C* whose standard deviation, defined as "σC*", for an angle of incidence of 15°, is strictly lower than 6.9.

In particular, the M coating has, in reflection, a $\sigma C^*$, for an angle of incidence of 15°, which is lower than or equal to 6.9, preferably lower than or equal to 6.8 and typically lower than or equal to 6.7. As used herein, a "standard deviation of the chroma, defined as "$\sigma C^*$ is lower than or equal to 6.9" includes the following values and/or any intervals comprised between these values (limits included except 2.0): 6.9. 6.8. 6.7. 6.6. 6.5. 6.4. 6.3. 6.2. 6.1. 6.0. 5.9. 5.8. 5.7. 5.6. 5.5; etc.

In general, the M coating may have, in reflection, for an angle of incidence of 15°, a chroma C* which is higher than or equal to 20, preferably higher than or equal to 30, in particular higher than or equal to 40 and typically higher than or equal to 60. As used herein, "a chroma C* higher than or equal to 20" includes the following values and/or any intervals comprised between these values (limits included): 20; 30; 40; 45; 50; 55; 60; 65; 70; 75; 80; 85; 90; etc.

According to the invention, the M coating has also an excellent hue robustness. Indeed, the IF coating has a hue angle whose standard deviation, defined as "$\sigma h$", for an angle of incidence of 15°, is lower than or equal to 5.7°, preferably lower than or equal to 5.6°. According to the invention, "a standard deviation, defined as "$\sigma h$", for an angle of incidence of 15°, which is lower than or equal to 5.7°" includes the following values and/or any intervals comprised between these values (in °): 5.7; 5.6; 5.5; 5.4; 5.3; 5.2; 5.1; 5.0; 4.9; 4.8; 4.7; 4.6; 4.5; 4.0; 3.5; 3.5; 3.0; 2.5; 2.0; 1.5; 1.0; 0.9; 0.8; 0.7; 0.6; 0.5; 0.4; 0.3; 0.2; 0.1; etc.

Whatever the embodiment, it is possible to prepare IF coatings without limitation as regards their hue angle h (0° to 360°), which relates to the residual color displayed by said IF coating.

In some embodiments, the IF coating has a hue angle (h) ranging from 15° to 120°, preferably from 25° to 110°, thus resulting in a perceived residual reflected color that is brown.

Especially, in some embodiments, the IF coating has a hue angle (h) ranging from 61° and 105°, thereby corresponding to a "yellow" residual reflection color.

In some embodiments, the IF coating has a hue angle (h) higher than or equal to 120 °, more preferably higher than or equal to 130° and better ranging from 130° to 200°, thus resulting in an IF coating having a green residual reflection color. Especially, in some embodiments, the IF coating has a hue angle (h) ranging from 106° and 209°, thereby corresponding to a "green" residual reflection color.

In some embodiments, the IF coating has a hue angle (h) ranging from 200° to 300°, preferably from 250° to 280°, thus resulting in a perceived residual reflected that is blue. In particular, in some embodiments, the IF coating has a hue angle (h) ranging from 210° and 330°, thereby corresponding to "blue" and derivatives residual reflection colors, including a more "bluepurple" or even "purple" residual reflection color.

In some embodiments, the IF coating has a hue angle (h) ranging from 331° to 60°, thereby corresponding to "red" and derivatives residual reflection colors, including "orange", "pink" or "pink gold" residual reflection color.

Then, the IF coating according to the invention has preferably excellent optical characteristics.

In particular, according to the embodiment wherein the IF coating is an AR coating, it has the following characteristics.

Especially, the AR coating has a low reflection in the visible region ranging from 380 nm to 780 nm at an angle of incidence of 15°. In particular, the AR coating has a mean light reflection factor in the visible region $R_v$ that is lower than or equal to 2.5 %, preferably lower than or equal to 2.0%, in particular lower than or equal to 1.5% and typically lower than or equal to 1.0%.

As used herein, a "a mean light reflection factor in the visible region $R_v$ that is lower than or equal to 2.5 %" includes the following values and/or any intervals comprised between these values (in %): 2.5; 2.4; 2.3; 2.2; 2.1; 2.0; 1.9; 1.8; 1.7; 1.6; 1.5; 1.4; 1.3; 1.2; 1.1; 1.0; 0.9; 0.8; 0.7; 0.4; 0.3; 0.2; 0.1, etc.

Moreover, the AR coating according to the invention has not only a very low reflection in the visible region, but also an excellent optical robustness of this mean light reflection factor Rv. Indeed, the AR coating according to the invention has generally a mean light reflection factor in the visible region Rv whose standard deviation, defined as "$\sigma Rv$" is lower than or equal to 0.10%, preferably lower than or equal to 0.09%, in particular lower than or equal to 0.08%.

According to the invention, a "standard deviation, defined as "$\sigma Rv$" which is lower than or equal to 0.10%" includes the following values and/or any intervals comprised between these values (in %): 0.10; 0.9; 0.8; 0.7; 0.6; 0.5; 0.4; 0.3; 0.2; 0.1; 0.05.

In addition, the AR coating according to the invention is configured to provide also preferably a very low reflection in the UV band and this with a very good robustness.

Hence, in general, the AR coating a mean reflection factor Ruv in the wavelength range from 280 to 380 nm that is lower than or equal to 5%, preferably lower than or equal to 3.0%, in particular lower than or equal to 2.5% and typically lower than or equal to 2.1%.

As used herein, a "a mean reflection factor Ruv that is lower than or equal to 5.0%" includes the following values and/or any intervals comprised between these values (in %): 5.0; 4.9; 4.8; 4.7; 4.6; 4.5; 4.4; 4.3; 4.2; 4.1; 4.0; 3.9; 3.8; 3.7; 3.6; 3.5; 3.4; 3.3; 3.2; 3.1; 3.0; 2.9; 2.8; 2.7; 2.6; 2.5; 2.4; 2.3; 2.2; 2.1; 2.0; 1.9; 1.8; 1.7; 1.6; 1.5; 1.4; 1.3; 1.2; 1.1; 1.0; 0.9; 0.8; 0.7; 0.4; 0.3; 0.2; 0.1, etc.

Moreover, the AR coating has, for an angle of incidence of 35° a mean reflection factor Ruv whose standard deviation, defined as "σRuv" is lower than or equal to 0.50%, preferably lower than or equal to 0.45%, in particular lower than or equal to 0.40%.

Also, as used herein, a "standard deviation, defined as "σRuv" which is lower than or equal to 0.50%" includes the following values and/or any intervals comprised between these values (in %): 0.50; 0.45; 0.40; 0.35; 0.30; 0.25; 0.20;0.15; 0.10; 0.05; etc.

In addition, according to the other embodiment wherein the IF coating is a M coating, it has the following optical characteristics.

Especially, the M coating has a relatively high reflection in the visible region ranging from 380 nm to 780 nm at an angle of incidence of 15°. In particular, the M coating has a mean light reflection factor in the visible region Rv that is strictly higher than 2.5 %, preferably higher than or equal to 2.8%, in particular higher than or equal to 3.0% and typically higher than or equal to 3.10%.

As used herein, a "a mean light reflection factor in the visible region Rv that is strictly higher than 2.5 %" includes the following values and/or any intervals comprised between these values (in %): 2.6; 2.7; 2.8; 2.9; 3.0; 3.1; 3.2; 3.3; 3.4; 3.5; 3.6; 3.7; 3.8; 3.9; 4.0; 4.5; 5.0; 5.5; 6.0; etc.

Moreover, the M coating according to the invention has not only a very high reflection in the visible region, but also an excellent optical robustness of this mean light reflection factor Rv. Indeed, the M coating according to the invention has generally a mean light reflection factor in the visible region Rv whose standard deviation, defined as "σRv" is lower than or equal to 1.0%, preferably lower than or equal to 0.85%, in particular lower than or equal to 0.83%.

According to the invention, a "standard deviation, defined as "σRv" which is lower than or equal to 1.0%" includes the following values and/or any intervals comprised between these values (in %): 1.0; 0.99; 0.98; 0.97; 0.96; 0.95; 0.94; 0.93; 0.92; 0.91; 0.90; 0.89; 0.88; 0.87; 0.86; 0.85; 0.84; 0.83; 0.82; 0.81; 0.80; 0.79; 0.78; 0.77; 0.76; 0.75; 0.74; 0.73; 0.72; 0.71; 0.70; 0.69; 0.68; 0.67; 0.66; 0.65; 0.64; 0.63; 0.62; 0.61; 0.60; 0.55; 0.50; 0.45; 0.40; etc.

In addition, the M coating according to the invention is configured to provide also preferably a very low reflection in the UV band and this with a very good robustness. This is particularly suitable when the M coating is applied on the front surface of a base element that includes photochromic compounds activable in the UV wavelengths range.

Hence, the M coating may have a mean reflection factor Ruv in the wavelength range from 280 to 380 nm that is lower than or equal to 5%, preferably lower than or equal to 3.0%, in particular lower than or equal to 2.5% and typically lower than or equal to 2.0%.

As used herein, a "a mean reflection factor Ruv that is lower than or equal to 5.0%" includes the following values and/or any intervals comprised between these values (in %): 5.0; 4.9; 4.8; 4.7; 4.6; 4.5; 4.4; 4.3; 4.2; 4.1; 4.0; 3.9; 3.8; 3.7; 3.6; 3.5; 3.4; 3.3; 3.2; 3.1; 3.0; 2.9; 2.8; 2.7; 2.6; 2.5; 2.4; 2.3; 2.2; 2.1; 2.0; 1.9; 1.8; 1.7; 1.6; 1.5; 1.4; 1.3; 1.2; 1.1; 1.0; 0.9; 0.8; 0.7; 0.4; 0.3; 0.2; 0.1, etc.

Moreover, the M coating has, for an angle of incidence of 35° a mean reflection factor Ruv whose standard deviation, defined as "σRuv" is lower than or equal to 0.50%, preferably lower than or equal to 0.45%, in particular lower than or equal to 0.40%.

Also, as used herein, a "standard deviation, defined as "σRuv" which is lower than or equal to 0.50%" includes the following values and/or any intervals comprised between these values (in %): 0.50; 0.45; 0.40; 0.35; 0.30; 0.25; 0.20;0.15; 0.10; 0.05; etc.

Furthermore, the optical article of the invention may have generally a ESPF coefficient that is higher than 20, in particular higher than or equal to 25 and typically higher than or equal to 30, such as 35. From a UV protection point of view, it is preferable for glasses to have an ESPF of a class greater than 25 and preferentially greater than 30.

Different structures of the IF coating according to the invention which is deposited onto the front main surface and/or the rear main surface of the base element, will be described hereafter.

As previously mentioned, the IF coating presents a specific stack of:

- at least one LI layer,
- at least one HI layer and
- the outermost LI sheet exhibiting a refractive index gradient which gradually decreases in the direction moving away from the base element and having a maximum value of refractive index lower than 1.55.

In general, the outermost sheet has a physical thickness lower than or equal to 150 nm, preferably equal to or lower than 140 nm, typically equal to or lower than 135 nm.

According to a characteristic of the invention, for the embodiment wherein the IF coating is an AR coating, the outermost sheet has a physical thickness lower than or equal to 100 nm, preferably equal to or lower than 90 nm, typically equal to or lower than 85 nm.

According to another characteristic of the invention, for the embodiment wherein the IF coating is a M coating, the outermost sheet has a physical thickness lower than or equal to 150 nm, preferably equal to or lower than 145 nm, typically equal to or lower than 140 nm.

As used herein, a "physical thickness lower than or equal to 150 nm" includes the following values and/or any intervals comprised between these values (in nm): 150; 145; 140; 135; 130; 125; 120; 115; 110; 105; 100; 99; 98; 97; 95; 95, 94; 93; 92; 91; 90; 89; 88; 87; 86; 85; 84, 83; 82; 81; 80; 79; 78; 77; 76; 75; 74; 73; 72; 71; 70; 69; 68; 67; 66; 65; 64; 63; 62; 61; 60; 55; 50; etc.

According to one embodiment, the outermost sheet of the IF coating may be composed of a single layer. Therefore, from the internal surface of this single layer directed towards the base element to the external surface of this single layer directed to the air, the refractive index gradient continuously decreased. In this embodiment, the internal surface of this single layer exhibits the maximum value of refractive index.

For this embodiment, in general the single outermost LI sheet of the IF coating may be deposited by evaporation of at least one precursor compound using electron-beam evaporation with introduction of oxygen gas in the vacuum chamber. Generally, the at least one precursor is $SiO_2$ or a mixture of $SiO_2 + Al_2O_3$ (silica doped with alumina) and is typically $SiO_2$.

So as to obtain a continuous decreased refractive index gradient in the thickness direction from the internal surface to the external surface, during the manufacture of the optical article in the vacuum chamber, oxygen gas flow rate is continuously increased. For instance, the oxygen gas flow rate can be continuously increased from a lower value to an upper value, such as from 0 sccm to 25 sccm or 50 sccm (or another upper value higher than the lower value). Consequently, the refractive index of the single outermost sheet continuously decreased in the thickness direction as compared to standard $SiO_2$ layer (for which there is no $O_2$ gas flow during its deposit) wherein the refractive index is stable (i.e.: does not change). In addition, the working pressure during the deposition of the at least one precursor with the above-mentioned different oxygen flowrates may be respectively: $7.0 \times 10^{-4}$ Pa (0 sccm $O_2$); $7.0 \times 10^{-3}$ Pa (25 sccm $O_2$); $1.3 \times 10^{-3}$ Pa (50 sccm $O_2$); $2.3 \times 10^{-3}$ Pa (90 sccm $O_2$).

According to another embodiment, the outermost sheet of the IF coating comprises:

- at least two layers comprising at least a first layer and a second layer deposited on said first layer and
- in particular at least three layers comprising at least a first layer, a second layer deposited on said first layer, and a third layer.

According to this embodiment, the refractive index gradient decreases layer per layer, from the layer which is the closest from the base element/substrate, that is to say the first layer, to the layer which is the closest from the air, that is to say the second or third layer or another layer of this outermost sheet that is located to the farthest from the base element. Hence, here, the first layer of this single layer exhibits the maximum value of refractive index.

Also, for this embodiment, the different layers composing the outermost LI sheet of the IF coating may be deposited by evaporation of at least one precursor compound using electron-beam evaporation with introduction of oxygen gas in the vacuum chamber. Generally, the at least one precursor is $SiO_2$ or a mixture of $SiO_2 + Al_2O_3$ (silica doped with alumina) and is typically $SiO_2$. In addition the working pressure during the deposition of the at least one precursor with the above-mentioned different oxygen flowrates may be respectively: $7.0 \times 10^{-4}$ Pa (0 sccm $O_2$); $7.0 \times 10^{-3}$ Pa (25 sccm $O_2$); $1.3 \times 10^{-3}$ Pa (50 sccm $O_2$); $2.3 \times 10^{-3}$ Pa (90 sccm $O_2$).

According to this embodiment,

- the first layer may correspond to a standard LI layer made for instance of $SiO_2$ deposited without introducing oxygen gas (or other gas) in the vacuum chamber or may be deposited by evaporation of at least one precursor compound, such as $SiO_2$, using electron-beam evaporation with introduction of oxygen gas in the vacuum chamber at a first flow rate;
- the second layer may be deposited by evaporation of at least one precursor compound, such as $SiO_2$, using electron-beam evaporation with introduction of oxygen gas in the vacuum chamber at a second flow rate which is higher than the first flow rate;
- the optional third layer may be deposited by evaporation of at least one precursor compound, such as $SiO_2$, using electron-beam evaporation with introduction of oxygen gas in the vacuum chamber at a third flow rate which is higher than the second flow rate;
- the optional subsequent layer "n" may be deposited by evaporation of at least one precursor compound, such as $SiO_2$, using electron-beam evaporation with introduction of oxygen gas in the vacuum chamber at a "n" flow rate which is higher than the "n-1" flow rate ("n-1" flow rate corresponding to the flow rate used for depositing the layer located underneath the layer "n").

For instance, when the outermost sheet of the IF coating comprises two layers, the first flow rate of oxygen gas may be selected from : 0 sccm, 25 sccm or 50 sccm and is preferably selected from: 0 sccm or 25 sccm; the second flow rate of oxygen gas (which is higher than the first flow rate) may be selected from : 25 sccm, 50 sccm or 75 sccm and is preferably selected from: 50 sccm or 75 sccm.

Also, when the outermost sheet of the IF coating comprises three layers, the first flow rate of oxygen gas may be selected from : 0 sccm or 25 sccm and is preferably selected from: 0 sccm; the second flow rate of oxygen gas (which is higher than the first flow rate) may be selected from : 25 sccm or 50 sccm and is preferably selected from: 25 sccm and the third flow rate of oxygen gas (which is higher than the second flow rate) may be selected from : 50 sccm or 75 sccm and is preferably selected from: 50 sccm.

In particular, according to this embodiment, the outermost sheet of the IF coating may comprise two layers:

- the thickness of the first layer is lower than or equal to 55 nm, preferably lower than or equal to 50 nm, typically lower than or equal to 45 nm and in particular is within the range from 20 nm to 45 nm, and
- the thickness of said second layer is lower than or equal to 55 nm, preferably lower than or equal to 50 nm, typically lower than or equal to 45 nm and in particular is within the range from 20 nm to 45 nm.

Especially, according to this embodiment, the outermost sheet of the IF coating may comprise three layers:

- the thickness of the first layer is lower than or equal to 50 nm, preferably lower than or equal to 45 nm, typically lower than or equal to 40 nm and in particular is within the range from 10 nm to 40 nm,
- the thickness of the second layer is lower than or equal to 50 nm, preferably lower than or equal to 45 nm, typically lower than or equal to 35 nm and in particular is within the range from 8 nm to 40 nm and
- the thickness of the third layer is lower than or equal to 55 nm, preferably lower than or equal to 50 nm, typically lower than or equal to 45 nm and in particular is within the range from 10 nm to 50 nm.

Especially, for the embodiment wherein the IF coating is M coating, the outermost sheet may comprise three layers:

- the thickness of the first layer is lower than or equal to 50 nm, preferably lower than or equal to 48 nm, typically lower than or equal to 45 nm and in particular is within the range from 15 nm to 45 nm,
- the thickness of the second layer is lower than or equal to 50 nm, preferably lower than or equal to 48 nm, typically lower than or equal to 45 nm and in particular is within the range from 15 nm to 45 nm and
- the thickness of the third layer is lower than or equal to 55 nm, preferably lower than or equal to 50 nm, typically lower than or equal to 45 nm and in particular is within the range from 20 nm to 50 nm.

Also, according to the invention, a "thickness of the first layer is lower than or equal to 55 nm" " includes the following values and/or any intervals comprised between these values (in nm): 55; 54; 53; 52; 51; 50; 49; 48; 47; 46; 45; 44; 43; 42; 41; 40; 39; 38; 37; 36; 35; 34; 33; 32; 31; 30; 29; 28; 27; 26; 25; 24; 23; 22; 21; 20; 19; 18; 17; 16; 15; 14; 13; 12; 11; 10; 9; etc.

In addition, according to the invention, a "thickness of the first layer is lower than or equal to 50 nm" " includes the following values and/or any intervals comprised between these values (in nm): 50; 49; 48; 47; 46; 45; 44; 43; 42; 41; 40; 39; 38; 37; 36; 35; 34; 33; 32; 31; 30; 29; 28; 27; 26; 25; 24; 23; 22; 21; 20; 19; 18; 17; 16; 15; 14; 13; 12; 11; 10; 9; etc.

Furthermore, according to the invention, a "thickness of the first layer is lower than or equal to 45 nm" includes the following values and/or any intervals comprised between these values (in nm): 45; 44; 43; 42; 41; 40; 39; 38; 37; 36; 35; 34; 33; 32; 31; 30; 29; 28; 27; 26; 25; 24; 23; 22; 21; 20; 19; 18; 17; 16; 15; 14; 13; 12; 11; 10; 9; 8; 7; 6; 5; etc.

According to the invention, the IF coating comprises also at least one layer having a low refractive index which is lower than 1.55, defined as "LI layer", and at least one layer having a high refractive index which is equal to or higher than 1.55, defined as "HI layer".

HI layers and LI layers don't need to alternate with each other in the stack of the IF coating, although they also may, according to one embodiment of the invention. Two HI layers (or more) may be deposited onto each other, as well as two LI layers (or more) may be deposited onto each other. In general, the HI layers and LI layers alternate with each other in the stack of the IF coating according to the invention.

In the present application, when two HI layers (or more) are deposited onto each other, they are not considered as being a single HI layer when counting the number of layers of the interferential stack. The same applies to stacks of two or more adjacent LI layers. However, in the description hereafter, the outermost LI sheet is considered as "one LI layer" (whatever the embodiment, i.e.: one single layer or composed of two or three layers) when counting the number of layers composing the IF coating according to the invention.

It is here a simple stack, since the layer total number in the IF coating (including the outermost LI sheet) is higher than or equal to 3 and in general lower than or equal to 16.

- According to an aspect of the invention, the total number of HI and LI layers in the IF coating is higher than or equal to 3, preferably higher than or equal to 4, more preferably higher than or equal to 5 and typically higher than or equal to 6, such as higher than or equal to 7.

- According to another aspect of the invention, the total number of HI and LI layers in the IF coating is lower than or equal to 16, especially lower than or equal to preferably lower than or equal to 15, more preferably lower than or equal to 13 and typically lower than or equal to 12.

For instance, the total number of HI and LI layers (including the outermost LI sheet) in the IF coating ranges from 4 to 6 layers, preferably from 5 to 6 layers.

The structure of the other LI and HI layers will be described hereafter.

In general, the HI layers are conventional high-refractive-index layers, well known in the art. They generally contain one or more mineral oxides such as, in a non-limiting manner, zirconia ($ZrO_2$), titanium oxide ($TiO_2$), trititanium pentoxide (TiaOs), alumina ($Al_2O_3$), tantalum pentoxide ($Ta_2O_5$), neodymium oxide ($Nd_2O_5$), praseodymium oxide ($Pr_2O_3$), praseodymium titanate ($PrTiO_3$), $La_2O_3$, $Nb_2O_5$, or $Y_2O_3$. Optionally the high-index layers may also contain silica or other low-refractive-index materials, provided that their refractive index is higher than 1.6 as indicated above. Preferred materials are $TiO_2$, PrTiOs, $ZrO_2$, $Ta_2O_5$, $Al_2O_3$, $Y_2O_3$ and their mixtures. Preferably, the one or more HI layers are made of zirconia ($ZrO_2$).

The LI layers are also well-known low-refractive-index layers and may comprise, in a non-limiting manner: silicon oxide, or else a mixture of silica and alumina, in particular silica doped with alumina, the latter contributing to increase the thermal resistance of the UV-reflecting interference coating. Each LI layer is preferably a layer comprising at least 80% by weight silica and better still at least 90% by weight silica, relative to the total weight of the layer, and even better still consists of a silica layer (i.e.: not obtained by evaporation of at least one precursor compound, such as $SiO_2$, using electron-beam evaporation with introduction of oxygen gas in the vacuum chamber).

Optionally, the low-index layers may also contain high-refractive-index materials, provided that the refractive index of the resulting layer is lower than 1.55.

When a LI layer comprising a mixture of $SiO_2$ and $Al_2O_3$ is used, it preferably comprises from 1% to 10% by weight, better still from 1% to 8% by weight and even better still from 1% to 5% by weight of $Al_2O_3$, with respect to the total weight of $SiO_2 + Al_2O_3$ in this layer. For example, $SiO_2$ doped with 4% or less $Al_2O_3$ by weight, or $SiO_2$ doped with 8% $Al_2O_3$ may be employed. Commercially available $SiO_2 / Al_2O_3$ mixtures may be used, such as the LIMA® mixture sold by Umicore Materials AG (refractive index comprised between n = 1.48-1.50 to 550 nm) or the substance L5® sold by Merck KGaA (refractive index n = 1.48 to 500 nm).

The optical article, such as an ophthalmic lens, of the invention may be made antistatic, i.e., such as to not retain and/or develop an appreciable electrostatic charge, by virtue of the incorporation of at least one electrically conductive layer into the stack present on the surface of the ophthalmic lens.

This electrically conductive layer is preferably located between two layers of IF coating and/or is adjacent to a high-refractive-index layer of this IF coating. Preferably, the electrically conductive layer is located immediately under the outermost LI sheet of the IF coating, and ideally forms the penultimate layer of the IF coating, i.e., it is located immediately under the outermost LI sheet of the IF coating according to the invention.

The electrically conductive layer must be sufficiently thin not to decrease the transparency of the UV-reflecting interference coating. The electrically conductive layer is preferably made from an electrically conductive and highly transparent material, generally an optionally doped metal oxide. In this case, its thickness preferably ranges from 1 to 15 nm and more preferably from 1 to 10 nm. The electrically conductive layer preferably comprises an optionally doped metal oxide chosen from indium oxide, tin oxide ($SnO_2$), zinc oxide and their mixtures. Indium tin oxide (tindoped indium oxide, $In_2O_3$:Sn), aluminum-doped zinc oxide (ZnO:Al), indium oxide ($In_2O_3$), and tin oxide ($SnO_2$) are preferred. According to one optimal embodiment, the electrically conductive and optically transparent layer is a layer of indium tin oxide (ITO) or a layer of tin oxide ($SnO_2$).

Generally, the electrically conductive layer contributes, within the stack, but to a limited extent, because of its small thickness, to the obtainment of antireflection properties and forms a high-refractive-index layer in the AR coating (also is considered as a HI layer when counting the number of layers). This is the case for layers made from an electrically conductive and highly transparent material such as layers of ITO.

According to another aspect of the invention, the IF coating (including the outermost LI sheet) has a total physical thickness lower than or equal to 1 $\mu$m, in particular lower than or equal to 900 nm and typically lower than or equal to 750 nm.

As used herein, "a thickness lower than or equal to 1 $\mu$m" includes the following values (in nm) and/or any intervals comprised between these values (limits included): 1000; 950; 900; 850; 800; 790; 780; 770; 760; 750; 740; 730; 720; 710; 700; 690; 680; 670; 660; 650; 640; 630; 620; 610; 600; 590; 580; 570; 560; 550; 540; 530; 520; 510; 500; 490; 480; 470; 460; 450; 440; 430; 420; 410; 400; 380; 350; 320; 300; 280; 250; 240; 220; 200; 180, etc.

In particular, each HI layer of the IF coating has a physical thickness lower than or equal to 170 nm, such as lower than or equal to 120 nm, preferably lower than or equal to 110 nm, more preferably lower than or equal to 100 nm.

According to a characteristic of the invention, for the embodiment wherein the IF coating is an AR coating, each HI layer of the AR coating may have a physical thickness lower than or equal to 120 nm, preferably lower than or equal to 110 nm, more preferably lower than or equal to 100 nm.

According to another characteristic of the invention, for the embodiment wherein the IF coating is a M coating, each HI layer of the M coating may have a physical thickness lower than or equal to 120 nm, preferably lower than or equal to 110 nm, more preferably lower than or equal to 100 nm, except the outermost HI layer which may have a physical thickness higher than or equal to 80 nm, preferably higher than or equal to 120 nm, such as higher than or equal to 150 nm (and lower than or equal to 170 nm).

In addition, apart from the LI outermost sheet, each LI layer of IF coating, has in general a physical thickness lower than or equal to 80 nm, preferably lower than or equal to 70 nm, more preferably lower than or equal to 60 nm and typically lower than or equal to 50 nm.

As used herein, "a physical thickness lower than or equal to 80 nm" includes the following values (in nm) and/or any intervals comprised between these values (limits included): 80; 75; 70; 65; 60; 55; 50; 45; 40; 35; 30; 25; 20; 15; 10; etc.

Generally, the outermost LI sheet of the IF coating has a physical thickness lower than or equal to 250 nm, such as lower than or equal to 150 nm, preferably lower than or equal to 140 nm, more preferably lower than or equal to 135 nm and typically lower than or equal to 130 nm. In particular, the outermost LI sheet has a physical thickness higher than or equal to 50 nm, preferably higher than or equal to 55 nm and typically higher than or equal to 60 nm. Especially, for the embodiment wherein the IF coating is a M coating, the outermost LI sheet has a physical thickness lower than or equal to 250 nm, such as lower than or equal to 240 nm, preferably lower than or equal to 230 nm, more preferably lower than or equal to 220 nm.

As used herein, "a physical thickness lower than or equal to 250 nm" includes the following values (in nm) and/or any intervals comprised between these values (limits included): 250; 240; 230; 220; 210; 200; 190; 180; 170; 160; 150; 80; 75; 70; 65; 60; 55; 50.

Moreover, the innermost layer of the IF coating, that is to say the layer that is the closest from the base element/substrate among all the layers of the IF coating is a HI layer. This innermost HI layer has a physical thickness lower than or equal to 110 nm, such as lower than or equal to 50 nm, preferably lower than or equal to 45 nm, more preferably lower than or equal to 40 nm and typically lower than or equal to 35 nm. Especially, for the embodiment wherein the IF coating is a M coating, the innermost HI layer has a physical thickness lower than or equal to 110 nm, preferably lower than or equal to 105 nm, more preferably lower than or equal to 100 nm and may be typically lower than or equal to 50 nm.

For instance, according to one embodiment, the IF coating, such as the AR coating, comprises, in order starting from the base element/substrate, which is optionally coated with one or more functional coatings,

    (1) the innermost HI layer having a physical thickness lower than or equal to 50 nm, in particular ranging from 5 nm to 50 nm, preferably ranging from 8 nm to 45 nm, and typically ranging from 8 nm to 40 nm, such as 10 nm to 35 nm;
    (2) a LI layer having a physical thickness lower than or equal to 80 nm, in particular ranging from 5 nm to 70 nm, preferably ranging from 8 nm to 60 nm, and typically ranging from 8 nm to 50 nm, such as ranging from 8 nm to 40 nm, such as 8nm to 35 nm;
    (3) a HI layer having a physical thickness lower than or equal to 130 nm, in particular ranging from 55 nm to 130 nm, preferably ranging from 60 nm to 125 nm, and typically ranging from 65 nm to 110 nm;
    (4) an optional antistatic layer having a physical thickness lower than or equal to 15 nm, in particular ranging from 4 nm to 10 nm;
    (5) the outermost LI sheet having a physical thickness lower than or equal to 150 nm, in particular ranging from 55 nm to 130 nm, preferably ranging from 60 nm to 100 nm, and typically ranging from 65 nm to 90 nm.

According to another embodiment, the IF coating such as the AR coating, comprises, in order starting from the base element/substrate, which is optionally coated with one or more functional coatings,

    (1) the innermost HI layer having a physical thickness lower than or equal to 50 nm, in particular ranging from 5 nm to 50 nm, preferably ranging from 8 nm to 45 nm, and typically ranging from 10 nm to 40 nm, such as 8 nm to 35 nm;
    (2) a LI layer having a physical thickness lower than or equal to 80 nm, in particular ranging from 5 nm to 70 nm, preferably ranging from 8 nm to 60 nm, and typically ranging from 8 nm to 50 nm, such as ranging from 8 nm to 40 nm, such as 8nm to 35 nm;
    (3) a HI layer having a physical thickness lower than or equal to 130 nm, in particular ranging from 55 nm to 130 nm, preferably ranging from 60 nm to 125 nm, and typically ranging from 65 nm to 110 nm;
    (4) a LI layer having a physical thickness lower than or equal to 50 nm, in particular ranging from 5 nm to 50 nm, preferably ranging from 8 nm to 40 nm, and typically ranging from 8 nm to 30 nm, such as ranging from 8 nm to 20 nm, such as 8nm to 15 nm;
    (5) an optional antistatic layer having a physical thickness lower than or equal to 15 nm, in particular ranging from 4 nm to 10 nm;
    (6) the outermost LI sheet having a physical thickness lower than or equal to 150 nm, in particular ranging from 55 nm to 130 nm, preferably ranging from 60 nm to 100 nm, and typically ranging from 65 nm to 90 nm.

For instance, according to one embodiment, the IF coating, such as the M coating, comprises, in order starting from the base element/substrate, which is optionally coated with one or more functional coatings,

(1) the innermost HI layer having a physical thickness lower than or equal to 110 nm, in particular ranging from 5 nm to 110 nm, preferably ranging from 10 nm to 105 nm, and typically ranging from 15 nm to 105 nm, such as 25 nm to 100 nm;
(2) a LI layer having a physical thickness lower than or equal to 80 nm, in particular ranging from 3 nm to 70 nm, preferably ranging from 3 nm to 60 nm, and typically ranging from 3 nm to 50 nm, such as ranging from 8 nm to 40 nm, such as 8 nm to 35 nm;
(3) a HI layer having a physical thickness lower than or equal to 130 nm, in particular ranging from 10 nm to 130 nm, preferably ranging from 10 nm to 125 nm, and typically ranging from 20 nm to 80 nm;
(4) a LI layer having a physical thickness lower than or equal to 250 nm, in particular ranging from 80 nm to 240 nm, preferably ranging from 85 nm to 230 nm, and typically ranging from 90 nm to 220 nm;
(5) a HI layer having a physical thickness lower than or equal to 160 nm, in particular ranging from 50 nm to 160 nm, preferably ranging from 60 nm to 160 nm, and typically ranging from 70 nm to 160 nm;
(6) the outermost LI sheet having a physical thickness lower than or equal to 150 nm, in particular ranging from 60 nm to 145 nm, preferably ranging from 80 nm to 145 nm, and typically ranging from 90 nm to 140 nm.

### B.3 Sub-layer

In one embodiment of the present invention, the IF coating may be deposited (generally directly) onto a sub-layer (i.e.: the sub-layer is positioned between the substrate and the interferential coating), also named "underlayer". It should be noted that such sub-layer does not belong to the IF coating according to the invention The expression " a sub-layer " is understood to mean a coating of relatively large thickness used with the aim of improving mechanical properties such as the resistance of said coating to abrasion and/or scratches and/or to promote its adhesion to the substrate or to the subjacent coating.

On account of its relatively large thickness, the underlayer generally does not participate in the interference optical activity, in particular in the case where it possesses a refractive index similar to that of the underlying coating (which is generally an anti-abrasion and anti-scratch coating) or that of the substrate when the underlayer is deposited directly on the substrate. Therefore, the underlayer, when it is present, is not considered to form part of the reflecting properties of the IF coating.

The underlayer must be thick enough to increase the resistance of the IF coating to abrasion, but preferably not too thick in order not to absorb light as, depending on the nature of the underlayer, this could significantly decrease the relative transmittance $\tau_v$. Its thickness is generally smaller than 300 nm and better still 200 nm and is generally larger than 90 nm and better still 100 nm.

The underlayer preferably comprises a layer based on $SiO_2$, this layer preferably comprising at least 80% by weight silica and better still at least 90% by weight silica relative to the total weight of the layer, and even better still this layer consists of a silica layer. The thickness of this silica-based layer is generally smaller than 300 nm and better still 200 nm and is generally larger than 90 nm and better still 100 nm. According to another embodiment, this $SiO_2$-based layer is a layer of silica doped with alumina, in proportions such as defined above, and preferably consists of a layer of silica doped with alumina.

According to one particular embodiment, the underlayer consists of a layer of $SiO_2$. It is preferable for the underlayer to be a monolayer.

However, the underlayer may be laminated (i.e.: multilayered sub-layer), in particular when the underlayer and the underlying coating (or the substrate if the underlayer is deposited directly on the substrate) have a non-negligible refractive index difference. Such a multilayered sub-layer generally comprises, in addition to the main layer (described above), a layer with a high refractive index and with a thickness lower than or equal to 80 nm, more preferably lower than or equal to 50 nm and most preferably lower than or equal to 30 nm. Such layer with a high refractive index is directly contacting the substrate with a high refractive index or the underlying coating with a high refractive index, as appropriate. Of course, this embodiment may be used even if the substrate (or the underlying coating) has a refractive index lower than 1.55.

As an alternative, the sub-layer comprises, in addition to the main layer and to the previously mentioned layer with a high refractive index, a layer made of a $SiO_2$-based material (that is to say comprising preferably at least 80% by weight of silica) with a refractive index lower than or equal to 1.55, preferably lower than or equal to 1.52, more preferably lower than or equal to 1.50, and with a thickness lower than or equal to 80 nm, more preferably lower than or equal to 50 nm and even more preferably lower than or equal to 30 nm, onto which is deposited said layer with a high refractive index. Typically, in this instance, the sub-layer comprises, deposited in this order onto the optionally coated substrate, a 10-25 nm-thick $SiO_2$ layer (such as 15-20 nm-thick $SiO_2$ layer), a 5-15 nm -thick $ZrO_2$ or $Ta2O_5$ layer (such as 5-10 nm -thick $ZrO_2$ or $Ta_2O5$ layer and thereafter the sub-layer main layer.

## B.4 Other functional layers

In some applications, it is preferred that the main surface of the substrate be coated with one or more functional coatings improving its optical and/or mechanical properties, prior to depositing the interferential coating of the invention.

These functional coatings traditionally used in optics may be, without limitation, an impact-resistant primer layer, an internal abrasion-resistant coating (also named hard coat), an antistatic coating especially on the concave face of the optical article, or a stack made of two or more of such coatings. Preferably, the ophthalmic lens comprises no photochromic coating and/or comprises no photochromic substrate.

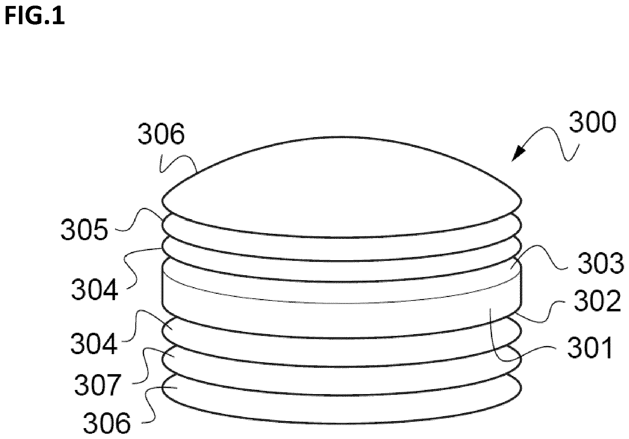

Fig.1 represents an optical article according to an embodiment of the invention.

In general and by referring to Fig.1 an optical article such as an ophthalmic lens 300 according to the invention comprises a base element/substrate 301 coated in succession on its front face 303 with an anti-shock primer layer 304, with an anti-abrasion and/or anti-scratch layer 305, the IF coating 306 according to the invention, and optionally with a hydrophobic and/or oleophobic coating (not represented). The optical article according to the invention is preferably an ophthalmic lens for a pair of spectacles (spectacle lenses), or an ophthalmic lens blank. The lens may be a polarized lens, a photochromic lens, or a tinted sunglass lens, optionally providing a correction.

In addition, the back face 302 of the optical article such as ophthalmic lens substrate may be coated in succession with an anti-shock primer layer 304, with an anti-abrasion and/or anti-scratch layer 307, with the IF coating 306 according to the invention, and optionally with a hydrophobic and/or oleophobic coating (not represented).

In one embodiment, the optical article according to the invention does not absorb in the visible or not much, which means, in the context of the present application, that its transmission factor in the visible range $\tau_V$, also called relative transmission factor in the visible range, is higher than 90%, more preferably higher than 95%, even more preferably higher than 96% and most preferably higher than 97%.

The factor $\tau_V$ should be understood as defined by the international normalized definition (ISO 13666:1998 Standard) and is measured in accordance with the ISO 8980-3 Standard. It is defined in the wavelength range of from 380 to 780 nm.

Preferably, the light absorption of the article coated according to the invention is lower than or equal to 1%.

### B.41 The abrasion-resistant and/or to scratch-resistant coatings

The abrasion-resistant and/or to scratch-resistant coatings are preferably hard coatings based on poly(meth) acrylates or on silanes generally comprising one or more mineral fillers intended to increase the hardness and/or the refractive index of the coating once cured.

Hard anti-abrasion and/or anti-scratch coatings are preferably prepared from compositions comprising at least one alkoxysilane and/or a hydrolyzate of the latter, for example obtained by hydrolysis with a hydrochloric acid solution and optionally condensation and/or curing catalysts.

Mention may be made, among the coatings recommended in the present invention, of coatings based on epoxysilane hydrolyzates, such as those described in the patents FR 2702486 (EP 0614957), US 4 211 823 and US 5 015 523.

A preferred composition for an anti-abrasion and/or anti-scratch coating is that disclosed in the patent FR 2 702 486 on behalf of the applicant. It comprises an epoxytrialkoxysilane and dialkyldialkoxysilane hydrolyzate, colloidal silica and a catalytic amount of aluminum-based curing catalyst, such as aluminum acetylacetonate, the remainder being essentially composed of solvents conventionally used for the formulation of such compositions. Preferably, the hydrolyzate used is a hydrolyzate of y-glycidoxypropyltrimethoxysilane (GLYMO) and dimethyldiethoxysilane (DMDES).

The anti-abrasion and/or anti-scratch coating composition may be deposited on the main face of the substrate by dip coating or spin coating. It is subsequently cured by the appropriate route (preferably thermal or UV).

The thickness of the anti-abrasion and/or anti-scratch coating generally varies from 2 to 10 $\mu$m, preferably from 3 to 5 $\mu$m.

### B.42 Primer coating

It is possible, prior to the deposition of the anti-abrasion and/or anti-scratch coating, to deposit, on the substrate, a primer coating which improves the impact resistance and/or the adhesion of the subsequent layers in the final product. This coating can be any impact-resistant primer layer conventionally used for articles made of transparent polymeric material, such as ophthalmic lenses.

Mention may be made, among preferred primer compositions, of compositions based on thermoplastic polyurethanes, such as those described in the Japanese patents JP 63-141001 and JP 63-87223, poly(meth)acrylic primer compositions, such as those described in the patent US 5 015 523, compositions based on thermosetting polyurethanes, such as those described in the patent EP 0 404 111, and compositions based on poly(meth)acrylic latexes or on latexes of polyurethane type, such as those described in the patents US 5 316 791 and EP 0 680 492.

Preferred primer compositions are polyurethane-based compositions and latex-based compositions, in particular polyurethane latexes optionally containing polyester units.

Among commercially available primer compositions suitable for the invention, mention may be made of the following: Witcobond(R) 232, Witcobond(R) 234, Witcobond(R) 240, Witcobond(R) 242, Neorez(R) R- 962, Neorez(R) R-972, Neorez(R) R-986 and Neorez(R) R-9603.

It is also possible to use in the primer compositions blends of these latexes, in particular of polyurethane latex and poly(meth)acrylic latex.

These primer compositions may be deposited on the faces of the article by dip coating or spin coating then dried at a temperature of at least 70°C and possibly of as a high as 100°C and preferably of about 90°C, for a time of 2 minutes to 2 hours and generally of about 15 minutes, in order to form primer layers having thicknesses, post-bake, of 0.2 to 2.5 $\mu$m and preferably from 0.5 to 1.5 $\mu$m.

**B.43** Hydrophobic coatings and/or oleophobic coatings

The ophthalmic lens according to the invention may also comprise coatings, formed on the UV-reflecting interference coating and capable of modifying its surface properties, such as hydrophobic coatings and/or oleophobic coatings (anti-smudge top coat). These coatings are preferably deposited on the external layer of the UV-reflecting interference coating. They are generally less than or equal to 10 nm in thickness, preferably from 1 to 10 nm in thickness and better still from 1 to 5 nm in thickness.

It is generally a question of fluorosilane or fluorosilazane coatings. They may be obtained by depositing a fluorosilane or fluorosilazane precursor preferably comprising at least two hydrolysable groups per molecule. The fluorosilane precursors preferably contain fluoropolyether groups and better still perfluoropolyether groups. These fluorosilanes are well known and are described, *inter alia* in patents US 5,081,192, US 5,763,061, US 6,183, 872, US 5,739, 639, US 5,922,787, US 6,337,235, US 6,277,485 and EP 0933377.

One preferred hydrophobic and/or oleophobic coating composition is sold by Shin-Etsu Chemical under the denomination KP 801 M(R). Another preferred hydrophobic and/or oleophobic coating composition is sold by Daikin Industries under the denomination OPTOOL DSX(R). It is a question of a fluororesin comprising perfluoropropylene groups.

## C) Process

The present invention also relates to a process for manufacturing an optical article as defined in any one of the preceding claims, comprising the following steps:

(a) providing the base element having a front main surface and a rear main surface ;
(b) depositing onto said front main surface and/or said rear main surface in a vacuum chamber, said interferential multilayered coating comprising said outermost sheet,

wherein said outermost sheet is deposited by evaporation of at least one precursor compound using electron-beam evaporation with introduction of oxygen gas in the vacuum chamber with a flow rate that is gradually increased during the deposition of said outermost sheet.

Especially, said at least one precursor compound is silicon oxide or a mixture of $SiO_2 + Al_2O_3$ (silica doped with alumina) and is typically $SiO_2$.

Especially, the outermost sheet is obtained according to the method such as described above (paragraph B.2) and will not be reproduced hereafter.

The other layers of the IF coating and the above-mentioned sublayer are preferably deposited by vapor phase deposition, under vacuum, in a vacuum deposition chamber, according to any of the following methods:

i) by evaporation, optionally under ion beam assistance;
ii) by ion-beam spraying;
iii) by cathode sputtering;
iv) by plasma-assisted chemical vapor deposition.

These various methods are described in the following references "Thin Film Processes" and "Thin Film Processes II," Vossen & Kern, Ed., Academic Press, 1978 and 1991, respectively. A particularly recommended method is evaporation under vacuum. Preferably, the deposition of each of the above-mentioned layers is conducted by evaporation under vacuum. Such a process does advantageously avoid heating the substrate, which is particularly interesting for coating heat-sensitive substrates such as organic glasses.

Naturally, the various embodiments described above for the optical article also apply to this method of manufacturing the optical article and will not be repeated below.

EXAMPLES

## A) Characterization

Optical and colorimetric measurements (in reflection) of the surface of the base element (i.e.: substrate) coated on its front surface and/or back surface with the exemplified interferential multilayered coatings (front face) : mean reflection factors Rv, Ruv, hue angle h, chroma C* in the international colorimetric CIE (L*, a*, b*) space were carried out with a spectrophotometer, taking into account the standard illuminant D65, and the standard observer 10° (for h and C*). They are provided for an angle of incidence of 15° for forward reflection (Cx face) and 35° for backward reflection (Cc face).

## B) General procedures

The ophthalmic lenses employed in the examples comprise a MR7® lens substrate (D1 to D9) or MR8® lens substrate (D10) of 65 mm diameter, of refractive index of 1.60, of -2.00 diopter power and of 1.2 mm thickness, coated on its front and back faces with the anti-abrasion and anti-scratch coating (hard coat) corresponding to the product Elis Mithril® hard coating (Essilor) of 3.5 $\mu$m thickness (refractive index of 1.6), then an antireflection multilayer interference coating according to the invention.

The layers of the antireflection coating were deposited without heating of the substrates by vacuum evaporation (evaporation source: the electron gun) (without introduction of an oxygen gas flow).

The deposition tool was a Satis 1200DLF machine equipped with a Temescal (8kV) electron gun for the evaporation of the oxides, and a (Veeco Mark II) ion gun for the preliminary phase of preparing the surface of the substrate with argon ions (IPC).

The thickness of the layers was controlled by means of a quartz microbalance. The spectral measurements were carried out using a variable-incidence Perkin-Elmer lambda 850 spectrophotometer with a universal reflectance accessory (URA).

The outermost sheet of the exemplified interferential coatings according to the invention was deposited by e-beam evaporation of $SiO_2$ as precursor with introduction of oxygen gas at different flow rates, which was gradually increased: 0 sccm, 25 sccm, 50 sccm depending on the examples. Hereafter, the layer obtained with the introduction of 25 sccm of $O_2$ is named "pQ25" and the layer obtained with the introduction of 50 sccm of $O_2$ is named "pQ50". In these examples according to the invention, this outermost sheet comprises two or three layers having a decreased refractive index gradient in the direction moving away from the substrate. Comparative lenses have been also manufactured wherein the outermost layer is a monolayer made of $SiO_2$ obtained by vacuum evaporation (i.e.: 0 sccm of $0_2$) or wherein the outermost layer deposited by e-beam evaporation of $SiO_2$ as precursor with introduction of oxygen gas at a constant flow rate of 50 sccm ("pQ50").

## C) Test procedure

The process used to prepare the ophthalmic lenses comprised introducing the substrate coated on its front face with the anti-abrasion and anti-scratch coating into a vacuum deposition chamber, a step of pumping the chamber down until a secondary vacuum was obtained, a step of activating the surface of the substrate with a beam of argon ions (anode current: 1 A, anode voltage: 100 V, neutralization current: 130 mA), turning the ion irradiation off, forming optionally the under-layer (hereafter "UL") on the substrate by evaporation, then subsequently the various layers of the antireflective coating by successive evaporations such as illustrated on the different tables below and at last a ventilation step.

## D) Tested Lenses and results

**D.1 Lenses 1 to 4 according to the invention and Comp. lenses 1 to 4 (antireflective characteristics)**

The table 1 below illustrates the structure and the optical characteristics of a reference lens Comp.1 as compared to Lenses 1 to 4 according to the invention. Lenses 1 to 4 have been obtained by replacing the standard $SiO_2$ outermost

layer (having a stable refractive index), by the outermost LI sheet according to the invention comprising either two or three layers and having a decreased refractive index gradient in the direction moving away from the substrate.

Table 1

| | Comp.1 | | Lens 1 | | Lens 2 | | Lens 3 | | Lens 4 | |
|---|---|---|---|---|---|---|---|---|---|---|
| | Materials | Thickness | Materials | Thickness | Materials | Thickness | Materials | Thickness | Materials | Thickness |
| | Air | | Air | | Air | | Air | | Air | |
| 7 | | | pQ50 | 27 | | | | | | |
| 6 | | | pQ25 | 18 | pQ25 | 38 | pQ50 | 40 | pQ50 | 40 |
| 5 | SiO$_2$ | 85 | SiO$_2$ | 35 | SiO$_2$ | 41 | SiO$_2$ | 40 | pQ25 | 39 |
| 4 | ITO | 7 | ITO | 7 | ITO | 7 | ITO | 7 | ITO | 7 |
| 3 | ZrO$_2$ | 68 | ZrO$_2$ | 74 | ZrO$_2$ | 78 | ZrO$_2$ | 78 | ZrO$_2$ | 79 |
| 2 | SiO$_2$ | 23 | SiO$_2$ | 21 | SiO$_2$ | 21 | SiO$_2$ | 20 | SiO$_2$ | 20 |
| 1 | ZrO$_2$ | 29 | ZrO$_2$ | 23 | ZrO$_2$ | 22 | ZrO$_2$ | 22 | ZrO$_2$ | 23 |
| | UL of SiO$_2$ | 150 | UL of SiO$_2$ | 150 | UL of SiO$_2$ | 150 | UL of SiO$_2$ | 150 | UL of SiO$_2$ | 150 |
| | Substrate + HC 1.6 (front face/Cx) | | Substrate + HC 1.6 (front face/Cx) | | Substrate + HC 1.6 (front face/Cx) | | Substrate + HC 1.6 (front face/Cx) | | Substrate + HC 1.6 (front face/Cx) | |

Optical characteristics

| | Comp.1 | Lens 1 | Lens 2 | Lens 3 | Lens 4 |
|---|---|---|---|---|---|
| Rv | 0.65 | 0.61 | 0.64 | 0.61 | 0.60 |
| σRv | 0.09 | 0.07 | 0.08 | 0.08 | 0.09 |
| h | 135 | 135 | 135 | 135 | 135 |
| σh | 4.6 | 2.5 | 3.0 | 2.7 | 2.5 |
| C* | 9 | 9.0 | 9 | 9 | 9 |
| σC* | 2.1 | 1.5 | 1.7 | 1.7 | 1.7 |

Table 1 above shows the layer structure of a standard anti-reflective coating (i.e.: Comp.1). By replacing the

outmost SiO$_2$ layer with the outermost sheet according to the invention comprising in the thickness direction moving away from the substrate three layers: SiO$_2$+pQ25+pQ50, a new AR coating according to the invention is obtained (i.e.: Lens 1) from this reference antireflective coating Comp.1. As mentioned above, in the examples, pQ25 and pQ50 are SiO$_2$ layers deposited under oxygen flow rate of 25 sccm and 50 sccm, respectively. Therefore, in Lens 1 according to the invention, the outmost sheet composed of SiO$_2$+pQ25+pQ50 has a decreased refractive index gradient.

Table 1 also compares the reflection properties of at least the AR coatings of Comp.1 and Lens 1. Rv and σRv of Comp.1 are slightly higher than those values of Lens 1. Most importantly, it is interesting to note that color robustness of Lens1 is evidently better (with lower σh* and σC* values) than that of Comp.1, which is practically favourable for mass production. As show by examples according to Lenses 2 to 4 illustrated on Table 1, the outermost LI sheet may be composed of two layers: either (Lens 2) SiO$_2$+pQ25, or (Lens 3) SiO$_2$+pQ50, or (Lens 4) pQ25+pQ50. Table 1 also compares the reflection properties of the four Lenses 1 to 4 according to the invention and designed from the reference AR coating Comp.1. It was interesting to note that Lens 1 with the outermost comprising three layers (SiO$_2$+pQ25+pQ50) exhibits the best colormetric robustness (with the lowest σh* and σC* values) and σRv as well, among all these Lenses 1 to 4. However, Lenses 2 to 4 show better optical and color robustness than the reference Lens Comp.1.

### D.2 Lens 5 according to the invention and Comp. lens 2 (antireflective characteristics)

The table 2 below illustrates the structure and the optical characteristics of a reference lens Comp.2 as compared to Lens 5 according to the invention. Lens 5 has been obtained by replacing the standard SiO$_2$ outermost layer (having a stable refractive index), by the outermost LI sheet according to the invention comprising here three layers: SiO$_2$+pQ25+pQ50 and having a decreased refractive index gradient in the direction moving away from the substrate.

| | Comp.2 | | | Lens 5 | |
|---|---|---|---|---|---|
| | Materials | Thickness | | Materials | Thickness |
| | Air | | | Air | |
| 7 | | | | pQ50 | 23 |
| 6 | | | | pQ25 | 26 |
| 5 | SiO$_2$ | 72 | | SiO$_2$ | 26 |
| 4 | SnO$_2$ | 7 | | SnO$_2$ | 7 |
| 3 | ZrO$_2$ | 90 | | ZrO$_2$ | 92 |
| 2 | SiO$_2$ | 26 | | SiO$_2$ | 25 |
| 1 | ZrO$_2$ | 15 | | ZrO$_2$ | 16 |
| | UL SiO$_2$ | 145 | | ULSiO$_2$ | 145 |

| Comp.2 | | | | Lens 5 | |
|---|---|---|---|---|---|
| ZrO$_2$ | 8 | | ZrO$_2$ | | 8 |
| SiO$_2$ | 17 | | SiO$_2$ | | 20 |
| Substrate + HC 1.6 (Rear face/Cc) | | | Substrate + HC 1.6 (rear face/Cc | | |
| **Optical characteristics** | | | | | |
| Rv | 0.71 | | | | **0.67** |
| σRv | 0.10 | | | | **0.08** |
| Ruv | 2.04 | | | | **1.84** |
| σRuv | 0.33 | | | | **0.22** |
| ESPF (3σ) | 33 | | | | **40** |
| h | 135 | | | | 135 |
| σh | 7.6 | | | | **5.9** |
| C* | 9.0 | | | | 9.0 |
| σC* | 2.0 | | | | **1.7** |

*Table 2*

Table 2 shows that both Rv (and σRv as well) and Ruv of Lens 5 are lower than those of the standard Comp.2. Moreover, colormetric robustness of Lens 5 according to the invention are evidently better (with lower σh*and σC* values) than that of the standard Comp.2, which is favorable for mass production. It is also noted that σRuv of Lens 5 is evidently lower than that of the standard Comp.2. The calculated ESPF value of Comp.2 is 33, which might indicate some practical difficulty for achieving the targeted ESPF value of 35. On the other hand, however, the calculated-ESPF value of the new Lens 5 is 35, which makes it more reliable for achieving the targeted ESPF value.

### D.3 Lens 6 according to the invention (antireflective characteristics)

The table 3 below illustrates the structure and the optical characteristics of Lens 6 according to the invention. Lens 6 has been obtained by replacing a standard SiO$_2$ outermost layer (having a stable refractive index) by the outermost LI sheet according to the invention comprising here three layers: SiO$_2$+pQ25+pQ50 and having a decreased refractive index gradient in the direction moving away from the substrate.

| | Lens 6 | |
|---|---|---|
| | Materials | Thickness |
| | Air | |
| 7 | pQ50 | 30 |
| 6 | pQ25 | 29 |
| 5 | SiO$_2$ | 28 |
| 4 | SnO$_2$ | 7 |

| | Lens 6 | |
|---|---|---|
| 3 | $ZrO_2$ | 87 |
| 2 | $SiO_2$ | 10 |
| 1 | $ZrO_2$ | 30 |
| | Substrate + HC 1.6 (front face/Cx) | |
| Optical characteristics | | |
| | Rv | 0.68 |
| | σRv | 0.07 |
| | σRv | 135 |
| | σRv | 3.6 |
| | C* | 9.0 |
| | C* | 0.9 |

*Table 3*

Table 3 shows that the new IF coating according to the invention (Lens 6) show excellent AR performance, including lower Rv and σRv, better robustness (low σh* and σC* values). This Lens 6 with a gradient decreasing index outmost layer is practically desirable for mass production because of their good repeatability and easier to set up.

**D.4 Lens 7 according to the invention and Comp. lens 3 (antireflective characteristics)**

The table 4 below illustrates the structure and the optical characteristics of a reference lens Comp.3 as compared to Lens 7 according to the invention. Lens 7 has been obtained by replacing the standard $SiO_2$ outermost layer (having a stable refractive index), by the outermost LI sheet according to the invention comprising here three layers: $SiO_2$ +pQ25+pQ50 and having a decreased refractive index gradient in the direction moving away from the substrate.

| | Comp.3 | | | Lens 7 | |
|---|---|---|---|---|---|
| | Materials | Thickness | | Materials | Thickness |
| | Air | | | Air | |
| 7 | | | | pQ50 | 22 |
| 6 | | | | pQ25 | 32 |
| 5 | $SiO_2$ | 72 | | $SiO_2$ | 21 |
| 4 | $SnO_2$ | 7 | | $SnO_2$ | 7 |
| 3 | $ZrO_2$ | 89 | | $ZrO_2$ | 89 |
| 2 | $SiO_2$ | 31 | | $SiO_2$ | 30 |
| 1 | $ZrO_2$ | 14 | | $ZrO_2$ | 15 |
| | UL $SiO_2$ | 151 | | UL$SiO_2$ | 149 |

| Comp.3 | | | | Lens 7 | |
|---|---|---|---|---|---|
| ZrO$_2$ | 7 | | ZrO$_2$ | | 6 |
| SiO$_2$ | 37 | | SiO$_2$ | | 37 |
| Substrate + HC 1.6 (rear face/Cc) | | | Substrate + HC 1.6 (rear face/Cc) | | |
| **Optical characteristics** | | | | | |
| Rv | 0.64 | | | | **0.61** |
| σRv | 0.12 | | | | **0.08** |
| Ruv | 2.06 | | | | **1.94** |
| σRuv | 0.28 | | | | **0.26** |
| ESPF (3σ) | 34 | | | | **37** |
| h | 45 | | | | 45 |
| σh | 11.7 | | | | **6.9** |
| C* | 8.9 | | | | 9.0 |
| σC* | 1.9 | | | | **1.4** |

*Table 4*

Table 4 shows that the new IF coating according to the invention (Lens 7) show better AR performance, including lower Rv and σRv, better robustness (lower σh* and σC* values), and/or lower Ruv and lower σRuv, than the reference one with a homogeneous outmost SiO$_2$ layer (Comp.3). This Lens 7 with a gradient decreasing index outmost layer is practically desirable for mass production because of their good repeatability and easier to set up. The new Lens 7 with the outermost sheet according to the invention shows a much better color dispersion. It can effectively reduce σh* from 11.7 to 6.9 and σC* from 1.9 to 1.4. This new Lens 7 is therefore much easier to set up.

**D.5 Lens 8 according to the invention (antireflective characteristics)**

The table 5 below illustrates the structure and the optical characteristics of Lens 8 according to the invention. Lens 8 has been obtained by replacing a standard SiO$_2$ outermost layer (having a stable refractive index), by the outermost LI sheet according to the invention comprising here three layers: SiO$_2$+pQ25+pQ50 and having a decreased refractive index gradient in the direction moving away from the substrate.

| | Lens 8 | |
|---|---|---|
| | Materials | Thickness |
| | Air | |
| 7 | pQ50 | 43 |
| 6 | pQ25 | 14 |
| 5 | SiO$_2$ | 28 |

| | Lens 8 | |
|---|---|---|
| 4 | SnO$_2$ | 7 |
| 3 | ZrO$_2$ | 101 |
| 2 | SiO$_2$ | 33 |
| 1 | ZrO$_2$ | 12 |
| | Underlayer SiO$_2$ | 97 |
| | ZrO$_2$ | 7 |
| | SiO$_2$ | 54 |
| | Substrate + HC 1.6 (rear face/Cc | |
| **Optical characteristics** | | |
| | Rv | **0.34** |
| | σRv | **0.05** |
| | Ruv | **2.95** |
| | σRuv | **0.37** |
| | ESPF (3σ) | **24.7** |
| | h | 365 |
| | σh | **10.3** |
| | C* | 13.6 |
| | σC* | **1.2** |

*Table 5*

Table 5 shows that the new AR coating according to the invention (Lens 8) show excellent AR performance, including lower Rv and σRv, better robustness (lower σh* and σC* values), and/or lower Ruv and lower σRuv,. This Lens 8 with a gradient decreasing index outmost layer is practically desirable for mass production because of their good repeatability and easier to set up.

**D.6 Lens 9 according to the invention and Comp. lens 4 (antireflective characteristics)**

The table 6 below illustrates the structure and the optical characteristics of a reference lens Comp.4 as compared to Lens 9 according to the invention. Lens 9 has been obtained by replacing the standard SiO$_2$ outermost layer (having a stable refractive index), by the outermost LI sheet according to the invention comprising here three layers: SiO$_2$ +pQ25+pQ50 and having a decreased refractive index gradient in the direction moving away from the substrate.

| Comp.4 | | | | Lens 9 | | |
|---|---|---|---|---|---|---|
| | Materials | Thickness | | | Materials | Thickness |
| | Air | | | | Air | |
| 8 | | | | | pQ50 | 38 |

| | Comp.4 | | | Lens 9 | |
|---|---|---|---|---|---|
| 7 | | | | pQ25 | 19 |
| 6 | $SiO_2$ | 68 | | $SiO_2$ | 17 |
| 5 | $SnO_2$ | 7 | | $SnO_2$ | 7 |
| 4 | $SiO_2$ | 13 | | | 12 |
| 3 | $ZrO_2$ | 96 | | $ZrO_2$ | 98 |
| 2 | $SiO_2$ | 31 | | $SiO_2$ | 31 |
| 1 | $ZrO_2$ | 12 | | $ZrO_2$ | 12 |
| | Underlayer $SiO_2$ | 127 | | Underlayer $SiO_2$ | 117 |
| | $ZrO_2$ | 5 | | $ZrO_2$ | 4 |
| | $SiO_2$ | 32 | | $SiO_2$ | 33 |
| | Substrate + HC 1.6 (rear face/Cc | | | Substrate + HC 1.6 (rear face/Cc | |
| **Optical characteristics** | | | | | |
| | Rv | 0.40 | | | **0.34** |
| | σRv | 0.06 | | | **0.05** |
| | Ruv | 2.17 | | | **2.03** |
| | σRuv | 0.24 | | | **0.19** |
| | ESPF (3σ) | 34.7 | | | **38.4** |
| | h | 275 | | | 275 |
| | σh | 8.6 | | | **8.1** |
| | C* | 13.5 | | | 13.5 |
| | σC* | 1.6 | | | **1.4** |

*Table 6*

Table 6 shows that the new AR coating according to the invention (Lens 9) show better AR performance, including lower Rv and σRv, better robustness (lower σh* and σC* values), and/or lower Ruv and lower σRuv, than the reference one with a homogeneous outmost $SiO_2$ layer (Comp.4). This Lens 9 with a gradient decreasing index outmost layer is practically desirable for mass production because of their good repeatability and easier to set up. The calculated ESPF value of Comp.4 is slightly lower than 35, which might indicate some practical difficulty for achieving the targeted ESPF value of 35. On the other hand, however, the calculated-ESPF value of the new Lens 9 is higher than 38, which makes it more reliable for achieving the targeted ESPF value of 35.

**D.7 Comparative examples**

The tables 7 to 9 below illustrate the structure and the optical characteristics of a comparative lens 5, Comp.5 and another comparative lens 6, Comp.6, as compared to Comp.1/Lens 1 according to the invention and Comp.2/Lens 5 according to the invention, respectively. In these Comp.5 and Comp.6, the outermost LI layer/sheet has been replaced by a layer having a stable refractive index deposited by evaporation of $SiO_2$ using electron-beam evaporation with introduction of oxygen gas in the vacuum chamber at a regular flow rate of 50 sccm. Tis layer is named pQ50.

| | Comp.5 | | | Comp. 6 | |
|---|---|---|---|---|---|
| | Materials | Thickness | | Materials | Thickness |
| | Air | | | Air | |
| 5 | pQ50 | 78 | | pQ50 | 76 |
| 4 | SnO$_2$ | 7 | | SnO$_2$ | 7 |
| 3 | ZrO$_2$ | 83 | | ZrO$_2$ | 99 |
| 2 | SiO$_2$ | 19 | | SiO$_2$ | 25 |
| 1 | ZrO$_2$ | 22 | | ZrO$_2$ | 16 |
| | Underlayer SiO$_2$ | 150 | | Underlayer SiO$_2$ | 145 |
| | | | | ZrO$_2$ | 8 |
| | | | | SiO$_2$ | 24 |
| | Substrate + HC 1.6 (front face/Cx) | | | Substrate + HC 1.6 (front face/Cx) | |

*Table 7*

The optical and color characteristics of Comp.7 have been compared to the reference lens Comp.1 and to Lens 1 according to the invention (similar structure) (see Table 8).

*Table 8*

| | Rv | σRv | h | σh | C* | σC* |
|---|---|---|---|---|---|---|
| **Comp.1** | 0.65 | 0.09 | 135 | 4.6 | 9.0 | 2.1 |
| **Lens 1** | **0.61** | **0.07** | 135 | **2.5** | 9.0 | **1.5** |
| **Comp.5** | **0.59** | 0.10 | 135 | 3.1 | 9.0 | 2.0 |

Table 8 compares the reflection properties of the AR coating of Comp.5 (outermost LI layer composed of pQ50 with those of Comp.1 (reference lens) and Lens 1 (lens according to the invention comprising the outermost LI sheet having a decreased refractive index gradient in the direction of its thickness). It was found that Comp.5 has a lower Rv than both Lens 1 and Comp.1. Its σRv and colorimetric robustness (σh and σC* values) are very close to those of the ones of Comp.1 but worse than those of Lens 1.

In addition, the optical and color characteristics of Comp.6 have been compared to the reference lens Comp.2 and to Lens 5 according to the invention (similar structure) (see Table 9)

| | Rv | σRv | Ruv | σRuv | ESPF | h | σh | C* | σC* |
|---|---|---|---|---|---|---|---|---|---|
| **Comp.2** | 0.71 | 0.10 | 2.04 | 0.33 | 33.09 | 135 | 7.6 | 9 | 2.0 |
| **Lens 5** | **0.67** | **0.08** | **1.84** | **0.22** | **39.80** | 135 | **5.9** | 9 | **1.7** |
| **Comp.6** | **0.64** | 0.11 | **1.82** | 0.38 | 33.90 | 135 | 6.6 | 9 | 2.1 |

*Table 9*

Table 9 compares the reflection properties of the Of Comp.6 comprising an outermost LI layer composed of pQ50 with those of the reference lens Comp.2 and the Lens 5 according to the invention (similar structure except the outermost LI layer/sheet). This table 9 shows that Comp.6 has lower Rv and Ruv than both standard Comp.2 and Lens 5. Its σRv and colorimetric robustness (σh and σC* values) are very close to those of the ones of Comp.2, but worse than those of Lens 5. Moreover, σRv and, particularly, σRuv of Comp.6 is higher than the one of both standard Comp.2 and Lens 5. Consequently, its ESPF (considering 3 σRuv) is almost the same as that of the standard Comp.2, but evidently lower than that of Lens 5 according to the invention.

**D.8 Lens 10 according to the invention and Comp. lens 7 (reflective characteristics)**

The table 10 below illustrates the structure and the optical characteristics of a reference lens Comp.7 as compared to Lens 10 according to the invention. Lens 10 has been obtained by replacing the standard $SiO_2$ outermost layer (having a stable refractive index), by the outermost LI sheet according to the invention comprising here three layers: $SiO_2$+pQ25+pQ50 and having a decreased refractive index gradient in the direction moving away from the substrate.

| | Comp.7 | | | Lens 10 | |
|---|---|---|---|---|---|
| | Materials | Thickness | | Materials | Thickness |
| | Air | | | Air | |
| 8 | | | | pQ50 | 45 |
| 7 | | | | pQ25 | 45 |
| 6 | $SiO_2$ | 130 | | $SiO_2$ | 43 |
| 5 | $Ta_2O_5$ | 160 | | $Ta_2O_5$ | 159 |
| 4 | $SiO_2$ | 106 | | $SiO_2$ | 106 |
| 3 | $Ta_2O_5$ | 26 | | $Ta_2O_5$ | 26 |
| 2 | $SiO_2$ | 7 | | $SiO_2$ | 5 |
| 1 | $Ta_2O_5$ | 95 | | $Ta_2O_5$ | 98 |
| | Substrate + HC 1.6 (rear face/Cc) | | | Substrate + HC 1.6 (rear face/Cc) | |
| **Optical characteristics** | | | | | |
| | Rv | 3.50 | | Rv | **3.5** |
| | σRv | 0.74 | | σRv | **0.69** |
| | h | 300 | | h | 135 |
| | σh | 5.3 | | σh | **4.8** |
| | C* | 73 | | C* | 6.9 |

| | Comp.7 | | | Lens 10 | |
|---|---|---|---|---|---|
| | σC* | 7.0 | | σC* | **6.8** |

*Table 10*

Table 10 shows the layer structure of a conventional mirror coating with a homogenous outmost $SiO_2$ layer (Comp. Lens 7). By replacing the outmost $SiO_2$ layer with three sub-layers SiO2+pQ25+pQ50 according to the inventio, a new mirror for Lens 10 is obtained. In the M coating of Lens 10, the outmost SiO2+pQ25+pQ50 layer is a gradient decreasing index layer. It is noted that colormetric robustness of the M coating are better (with lower σh* and σC* values) than that of the reference conventional Mirror stack with a homogenous outmost $SiO_2$ layer. Moreover, σRv of the new M coating is also lower than the conventional one Comp.4.

**D.9 Lens 11 according to the invention and Comp. lens 8 (reflective characteristics)**

The table 11 below illustrates the structure and the optical characteristics of a reference lens Comp.8 as compared to Lens 11 according to the invention. Lens 11 has been obtained by replacing the standard $SiO_2$ outermost

layer (having a stable refractive index), by the outermost LI sheet according to the invention comprising here three layers: $SiO_2$+pQ25+pQ50 and having a decreased refractive index gradient in the direction moving away from the substrate.

| | Comp.8 | | | Lens 11 | |
|---|---|---|---|---|---|
| | Materials | Thickness | | Materials | Thickness |
| | Air | | | Air | |
| 8 | | | | pQ50 | 43 |
| 7 | | | | pQ25 | 33 |
| 6 | $SiO_2$ | 103 | | $SiO_2$ | 31 |
| 5 | $Ta_2O_5$ | 87 | | $Ta_2O_5$ | 85 |
| 4 | $SiO_2$ | 223 | | $SiO_2$ | 218 |
| 3 | $Ta_2O_5$ | 63 | | $Ta_2O_5$ | 70 |
| 2 | $SiO_2$ | 35 | | $SiO_2$ | 33 |
| 1 | $Ta_2O_5$ | 32 | | $Ta_2O_5$ | 32 |
| | Substrate + HC 1.6 (rear face/Cc) | | | Substrate + HC 1.6 (rear face/Cc) | |
| **Optical characteristics** | | | | | |
| | Rv | 3.10 | | | **3.10** |
| | σRv | 0.86 | | | **0.81** |
| | h | 292 | | | 292 |
| | σh | 6.0 | | | **5.6** |
| | C* | 73 | | | 73 |
| | σC* | 7.0 | | | **6.4** |

*Table 11*

Table 11 shows the layer structure of another conventional mirror coating with a homogenous outmost SiO2 layer. By replacing the outmost SiO2 layer with three sub-layers SiO2+pQ25+pQ50, a new mirror stack Mirror according to the invention is obtained. In the Lens 11, the outmost SiO2+pQ25+pQ50 layer is a gradient decreasing index layer. The colormetric robustness of the M coating of Lens 11 are better (with lower σh* and σC* values) than that of the reference conventional Mirror stack with a homogenous outmost SiO2 layer. In addition, the σRv of the new M coating of Lens 11 is also lower than the conventional mirror stack.

**D.10 Mechanical performances**

In order to investigate the mechanical performances of the new AR coatings according to the invention, some Lenses have been prepared according to the structures shown in Table 12 below:

*Table 12*

| | **Comp.9** | **Lens 12** | **Comp.10** |
|---|---|---|---|
| Front main face/Cx | AR coating of Comp.1 | AR coating of Lens 1 | AR coating of Comp.5 |
| Substrate | MR8® | MR8® | MR8® |
| Rear main face/Cc | AR coating of Comp.2 | AR coating of Lens 5 | AR coating of Comp.6 |

Lens 12 according to the invention is coated with the new AR coatings described for Lens 1 and 5 with gradient decreasing index outmost SiO2 layer. Comp. 9 and 10 are prepared for comparison. Comp.9 is coated with standard AR coating on Cx and another standard AR coating on Cc. Comp.10 is coated with the comparative AR coating describes for Comp.5 and Comp.6.

The tested parameters are as follows:

* The Tv factor, also called "luminous transmission" of the system, is such as defined in ISO standard 13666:1998 and is measured accordingly to standard ISO 8980-3. It is defined as the average in the 380 -780 nm wavelength range that is weighted according to the sensitivity of the eye at each wavelength of the range and measured under D65 illumination conditions (daylight).
* The critical temperature of the different lenses was measured in the manner indicated in patent application WO 2008/001011. It was measured one day, one week and one month after production of the article.
* The haze value of the tested lenses were measured by light transmission as disclosed in WO 2012/173596 utilizing the Haze-Guard Plus haze meter from BYK-Gardner (a color difference meter) according to the method of ASTM D1003-00 before and after the test has been performed. As haze is a measurement of the percentage of transmitted light scattered more than 2.5° from the axis of the incident light, the smaller the haze value, the lower the degree of cloudiness. Generally, for lenses described herein, a haze value of less than or equal to 0.3% is acceptable, more preferably of less than or equal to 0.2%.
* Determination of the Abrasion Resistance ("ISTM Bayer Test" or "Bayer Alumina")

Abrasion resistance was determined as disclosed in WO 2012/173596. Specifically, abrasion resistance was measured by means of the sand Bayer test, in accordance with the ASTM F735-81 standard, one week after production of the article.

* Evaluation of the adhesion properties of the coatings (n*10 blow test)

A qualitative test was carried out using the procedure known as the "nx10 blow test." This procedure makes it possible to evaluate adhesion of a film deposited on a substrate, such as an ophthalmic lens. The test was performed such as described in international patent application WO 99/49097. The operator checked the state of the tested lens every 3 cycles, by visually inspecting the lens. He noted the cycle number through which a defect appeared for the first time. Consequently, the higher the test value, the better the adhesion of the layers of the AR stack to the substrate. For comparison purposes, a standard anti-reflection glass has nx10 blow values in the order of 12. n*10 blow test results of some prepared lenses are reported in table 14 (the test was carried out with 30 identical lenses).

The results are as follows:

| | Tv% | Haze | Sand Bayer | Critical temperature | | | N10 Blows |
|---|---|---|---|---|---|---|---|
| | | | | 1 Day | 1 week | 1 months | |
| Comp.9 | 97.50 | 0.04 | 4.30 | 100°C | 100°C | 90°C | > 12 |
| Lens 12 | 97.45 | 0.06 | 4.56 | 100°C | 100°C | 90°C | > 12 |
| Comp.10 | 97.35 | 0.10 | 3.27 | 80°C | 80°C | 70°C | > 12 |

*Table 13*

It was found that there is no adhesion issue (N10>12) for all the three kinds of lenses. All mechanical and thermal performance of Lens 12 are very close to those of standard Comp.9, indicating that the replacement of the outmost SiO2 layer with a gradient decreasing index layer SiO2+pQ25+pQ50 does not sacrifice the mechanical properties of the AR coating. For Comp.12, however, both abrasion wear resistance (Sand Bayer) and thermal resistance (critical temperature) were evidently degraded, as compared to the standard Comp.10 lens. Moreover, its haze level also increases evidently.

**Claims**

1. An optical article comprising at least:

    a base element having a front main surface and a rear main surface, and
    at least one interferential multilayered coating deposited onto the front main surface and/or the rear main surface of said base element and comprising at least one layer having a low refractive index which is lower than 1.55, defined as "LI layer", and at least one layer having a high refractive index which is equal to or higher than 1.55, defined as "HI layer", the refractive indexes being expressed at 25°C at a wavelength of 550 nm, **characterized in that**:

- said interferential multilayered coating comprises an outermost sheet exhibiting a refractive index gradient which gradually decreases in the direction moving away from the base element and having a maximum value of refractive index lower than 1.55,
- said interferential multilayered coating has, in reflection,

a Chroma C* defined in the international colorimetric CIE L*a*b* (1976) whose standard deviation, defined as "oC*", for an angle of incidence of 15°, is strictly lower than 2.0, and has a hue angle defined in the international colorimetric CIE L*a*b* (1976) whose standard deviation, defined as "oh", for an angle of incidence of 15°, is lower than or equal to 15° provided that said interferential multilayered coating has, for an angle of incidence of 15°, a mean light reflection factor in the visible region Rv that is lower than or equal to 2.5 %, or
a Chroma C* whose standard deviation, defined as "$\sigma$C*", for an angle of incidence of 15°, is strictly lower than 6.9, and has a hue angle whose standard deviation, defined as "oh", for an angle of incidence of 15°, is lower than or equal to 5.8°, provided that said interferential multilayered coating has, for an angle of incidence of 15°, a mean light reflection factor in the visible region Rv that is strictly higher than 2.5 %.

2. The optical article according to claim 1, wherein said interferential multilayered coating has, in reflection,

- a $\sigma$C*, for an angle of incidence of 15°, which is lower than or equal to 1.9, preferably lower than or equal to 1.8, typically lower than or equal to 1.7 provided that said interferential multilayered coating has, for an angle of incidence of 15° a Rv $\leq$ 2.5%, or
- a $\sigma$C*, for an angle of incidence of 15°, which is lower than or equal to 6.8, preferably lower than or equal to 6.7, typically lower than or equal to 6.6 provided that said interferential multilayered coating has, for an angle of incidence of 15° a Rv > 2.5%,

3. The optical article according to claim 1 or 2, wherein said interferential multilayered coating has, in reflection, for an angle of incidence of 15°,

- a chroma C* which is higher than or equal to 5, preferably higher than or equal to 6, in particular higher than or equal to 7 and typically higher than or equal to 8 provided that said interferential multilayered coating has, for an angle of incidence of 15° a Rv $\leq$ 2.5%, or
- a chroma C* which is higher than or equal to 5, preferably higher than or equal to 20, in particular higher than or equal to 30 and typically higher than or equal to 40 provided that said interferential multilayered coating has, for an angle of incidence of 15° a Rv > 2.5%,

4. The optical article according to any one of the preceding claims, wherein said interferential multilayered coating has in reflection, for an angle of incidence of 15°,

- a $\sigma$h lower than or equal to 11° provided that said interferential multilayered coating has, for an angle of incidence of 15° a Rv $\leq$ 2.5%, or
- a $\sigma$h lower than or equal to 5.7%, preferably lower than or equal to 5.6% provided that said interferential multilayered coating has, for an angle of incidence of 15° a Rv > 2.5%.

5. The optical article according to any one of the preceding claims, wherein said interferential multilayered coating has, for an angle of incidence of 15°, a mean light reflection factor in the visible region Rv that is lower than or equal to 2.5 %, preferably lower than or equal to 2.0%, in particular lower than or equal to 1.5% and typically lower than or equal to 1.0%.

6. The optical article according to any one of the preceding claims, wherein said interferential multilayered coating has, for an angle of incidence of 15°, a mean light reflection factor in the visible region Rv whose standard deviation, defined as "$\sigma$Rv" is lower than or equal to 0.10%, preferably lower than or equal to 0.09%, in particular lower than or equal to 0.08%.

7. The optical article according to any one of the preceding claims, wherein said interferential multilayered coating has, for an angle of incidence of 35°, a mean reflection factor Ruv in the wavelength range from 280 to 380 nm that is lower than or equal to 5%, preferably lower than or equal to 3.0%, in particular lower than or equal to 2.5% and typically lower than or equal to 2.1%.

8. The optical article according to any one of the preceding claims, wherein, said interferential multilayered coating has, for an angle of incidence of 35°, a mean reflection factor Ruv in the wavelength range from 280 to 380 nm, whose standard deviation, defined as "$\sigma$Ruv" is lower than or equal to 0.50%, preferably lower than or equal to 0.45%, in particular lower than or equal to 0.40%.

9. The optical article according to any one of the preceding claims, wherein said outermost sheet has a maximum value of refractive index lower than or equal to 1.52, preferably lower than or equal to 1.48 and typically lower than or equal to 1.47.

10. The optical article according to any one of the preceding claims, wherein said outermost sheet:

is deposited by evaporation of at least one precursor compound using electron-beam evaporation with introduction of oxygen gas in the vacuum chamber with a flow rate that is gradually increased during the deposition of said outermost sheet, preferably the at least one precursor is $SiO_2$,
optionally said outermost sheet comprises $SiO_2$.

11. The optical article according to any one of the preceding claims, wherein said outermost sheet has a physical thickness lower than or equal to 150 nm, preferably equal to or lower than 140 nm, typically equal to or lower than 90 nm.

12. The optical article according to any one of the preceding claims, wherein said outermost sheet is composed of a single layer or at least two layers and preferably at least three layers.

13. The optical article according to claim 12, wherein, in the direction moving away from the base element,

- the outermost sheet is composed of a first layer and a second layer deposited on said first layer, the thickness of the first layer is lower than or equal to 55 nm, preferably lower than or equal to 50 nm, typically lower than or equal to 45 nm and in particular is within the range from 20 nm to 45 nm, and the thickness of said second layer is lower than or equal to 55 nm, preferably lower than or equal to 50 nm, typically lower than or equal to 45 nm and in particular is within the range from 20 nm to 45 nm;
or
- the outermost sheet is composed of a first layer, a second layer deposited on said first layer, and a third layer deposited on said second layer, the thickness of the first layer is lower than or equal to 50 nm, preferably lower than or equal to 45 nm, typically lower than or equal to 40 nm and in particular is within the range from 10 nm to 40 nm, the thickness of the second layer is lower than or equal to 50 nm, preferably lower than or equal to 45 nm, typically lower than or equal to 40 nm and in particular is within the range from 8 nm to 40 nm and the thickness of the third layer is lower than or equal to 55 nm, preferably lower than or equal to 50 nm, typically lower than or equal to 45 nm and in particular is within the range from 10 nm to 50 nm.

14. A process for manufacturing an optical article as defined in any one of the preceding claims, comprising the following steps:

(a) providing the base element having a front main surface and a rear main surface;
(b) depositing onto said front main surface and/or said rear main surface in a vacuum chamber, said interferential multilayered coating comprising said outermost sheet,

wherein said outermost sheet is deposited by evaporation of at least one precursor compound using electron-beam evaporation with introduction of oxygen gas in the vacuum chamber with a flow rate that is gradually increased during the deposition of said outermost sheet.

15. The process according to claim 14, wherein said precursor compound is silicon oxide, or a mixture of $SiO_2 + Al_2O_3$ (silica doped with alumina) and is typically $SiO_2$.

**FIG.1**

# EUROPEAN SEARCH REPORT

**Application Number**

EP 23 30 7212

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | US 2017/307790 A1 (BELLMAN ROBERT ALAN [US] ET AL) 26 October 2017 (2017-10-26) * paragraph [0076]; figures 5,6 * ----- | 1-6,8, 10-15 | INV. G02B1/115 G02B5/08 G02B27/00 |
| Y | EP 3 907 537 A1 (ESSILOR INT [FR]) 10 November 2021 (2021-11-10) * paragraphs [0013], [0077] * ----- | 1-6,8, 10-15 | |
| Y | US 2018/011225 A1 (BELLMAN ROBERT ALAN [US] ET AL) 11 January 2018 (2018-01-11) * paragraph [0052] * ----- | 10 | |
| A | EP 2 873 994 A1 (JDS UNIPHASE CORP [US]) 20 May 2015 (2015-05-20) * paragraph [0051]; figure 8 * ----- | 1-15 | |
| A | US 6 768 581 B1 (YIP BRANDON [AU] ET AL) 27 July 2004 (2004-07-27) * example 2 * ----- | 1-15 | |
| A | US 2016/154254 A1 (BOLSHAKOV ILYA [FR] ET AL) 2 June 2016 (2016-06-02) * paragraphs [0019], [0031], [0059] – [0061] * ----- | 1-15 | **TECHNICAL FIELDS SEARCHED (IPC)** G02B |

The present search report has been drawn up for all claims

| Place of search | Date of completion of the search | Examiner |
|---|---|---|
| Munich | 10 May 2024 | Mollenhauer, Ralf |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 23 30 7212

This annex lists the patent family members relating to the patent documents cited in the above-mentioned European search report.
The members are as contained in the European Patent Office EDP file on
The European Patent Office is in no way liable for these particulars which are merely given for the purpose of information.

10-05-2024

| Patent document cited in search report | | | Publication date | Patent family member(s) | | Publication date |
|---|---|---|---|---|---|---|
| US 2017307790 | A1 | | 26-10-2017 | CN | 109071969 A | 21-12-2018 |
| | | | | EP | 3445825 A1 | 27-02-2019 |
| | | | | JP | 2019515331 A | 06-06-2019 |
| | | | | KR | 20180133479 A | 14-12-2018 |
| | | | | TW | 201806899 A | 01-03-2018 |
| | | | | US | 2017307790 A1 | 26-10-2017 |
| | | | | US | 2019339425 A1 | 07-11-2019 |
| | | | | WO | 2017184678 A1 | 26-10-2017 |
| EP 3907537 | A1 | | 10-11-2021 | CN | 115552290 A | 30-12-2022 |
| | | | | EP | 3907537 A1 | 10-11-2021 |
| | | | | EP | 4154039 A1 | 29-03-2023 |
| | | | | JP | 2023523851 A | 07-06-2023 |
| | | | | KR | 20230005199 A | 09-01-2023 |
| | | | | US | 2023176255 A1 | 08-06-2023 |
| | | | | WO | 2021224405 A1 | 11-11-2021 |
| US 2018011225 | A1 | | 11-01-2018 | CN | 109477909 A | 15-03-2019 |
| | | | | EP | 3482237 A2 | 15-05-2019 |
| | | | | JP | 6983864 B2 | 17-12-2021 |
| | | | | JP | 2019526071 A | 12-09-2019 |
| | | | | KR | 20190026005 A | 12-03-2019 |
| | | | | KR | 20220156657 A | 25-11-2022 |
| | | | | TW | 201808603 A | 16-03-2018 |
| | | | | US | 2018011225 A1 | 11-01-2018 |
| | | | | US | 2021003744 A1 | 07-01-2021 |
| | | | | US | 2023221467 A1 | 13-07-2023 |
| | | | | WO | 2018013462 A2 | 18-01-2018 |
| EP 2873994 | A1 | | 20-05-2015 | CN | 104656175 A | 27-05-2015 |
| | | | | CN | 111257985 A | 09-06-2020 |
| | | | | DK | 2873994 T3 | 11-11-2019 |
| | | | | EP | 2873994 A1 | 20-05-2015 |
| | | | | EP | 3561557 A1 | 30-10-2019 |
| | | | | HK | 1210837 A1 | 06-05-2016 |
| | | | | US | 2015138641 A1 | 21-05-2015 |
| | | | | US | 2019011618 A1 | 10-01-2019 |
| US 6768581 | B1 | | 27-07-2004 | AT | E419549 T1 | 15-01-2009 |
| | | | | CA | 2352359 A1 | 08-06-2000 |
| | | | | EP | 1137958 A1 | 04-10-2001 |
| | | | | MX | PA01005306 A | 06-06-2003 |
| | | | | US | 6768581 B1 | 27-07-2004 |
| | | | | WO | 0033111 A1 | 08-06-2000 |
| US 2016154254 | A1 | | 02-06-2016 | AU | 2013393576 A1 | 28-01-2016 |

EPO FORM P0459

For more details about this annex : see Official Journal of the European Patent Office, No. 12/82

page 1 of 2

## ANNEX TO THE EUROPEAN SEARCH REPORT
## ON EUROPEAN PATENT APPLICATION NO.

EP 23 30 7212

This annex lists the patent family members relating to the patent documents cited in the above-mentioned European search report.
The members are as contained in the European Patent Office EDP file on
The European Patent Office is in no way liable for these particulars which are merely given for the purpose of information.

10-05-2024

| Patent document cited in search report | Publication date | Patent family member(s) | Publication date |
|---|---|---|---|
| | | BR 112016000120 A2 | 25-07-2017 |
| | | CN 105359005 A | 24-02-2016 |
| | | EP 3017324 A1 | 11-05-2016 |
| | | JP 6470274 B2 | 13-02-2019 |
| | | JP 2016523385 A | 08-08-2016 |
| | | KR 20160052465 A | 12-05-2016 |
| | | US 2016154254 A1 | 02-06-2016 |
| | | WO 2015000534 A1 | 08-01-2015 |

EPO FORM P0459

For more details about this annex : see Official Journal of the European Patent Office, No. 12/82

page 2 of 2

**REFERENCES CITED IN THE DESCRIPTION**

**Patent documents cited in the description**

- JP 2001288562 A
- WO 2012076714 A
- FR 2702486
- EP 0614957 A
- US 4211823 A
- US 5015523 A
- JP 63141001 A
- JP 63087223 A
- EP 0404111 A
- US 5316791 A
- EP 0680492 A
- US 5081192 A

- US 5763061 A
- US 6183 A
- US 872 A
- US 5739 A
- US 639 A
- US 5922787 A
- US 6337235 B
- US 6277485 B
- EP 0933377 A
- WO 2008001011 A
- WO 2012173596 A
- WO 9949097 A

**Non-patent literature cited in the description**

- Thin Film Processes. **VOSSEN** ; **KERN**. Thin Film Processes II. Academic Press, 1978